# EUROPEAN PATENT APPLICATION

(11) **EP 4 760 486 A1**
(43) Date of publication of application: **17.06.2026**
(21) Application number: 25222344.1
(22) Date of filing: 10.12.2025
(51) Int. Cl.: G06F 8/35, G06F 8/36, G06N 20/00, G06F 11/00, G06F 16/3329, G06N 3/045

(54) **APPLICATION PROGRAMMING INTERFACE (API) INVOCATION USING NATURAL LANGUAGE TEXT**

(30) Priority: 13.12.2024 US 202463733859 P; 30.09.2025 US 202519345909
(71) Applicant: Juniper Networks, Inc., Sunnyvale, CA 94089-1206 (US)
(72) Inventor: MIRIYALA, Prasad, Sunnyvale, 94089 (US); JOSHI, Mansi, Sunnyvale, 94089 (US); IYYER, Kartik Krishnan S, Sunnyvale, 94089 (US); AGARWAL, Riti, Sunnyvale, 94089 (US)
(74) Representative: D Young & Co LLP

(57) **Abstract**

Techniques are disclosed for a conversational assistant system that employs a machine learning system to act as an intermediary between natural language questions of a user and one or more Application Programming Interfaces (APIs) implemented by a network analysis system. In one example, the conversational assistant system receives API definition files including sets of function definitions and corresponding function descriptions and a natural language question from a user device. The conversational assistant system processes the API definition files and the natural language question to obtain function definitions invoking API endpoints of the APIs. The conversational assistant system sequentially invokes, based on the function definitions, the API endpoints to obtain responses from the APIs implemented by the network analysis system. The conversational assistant system generates, based at least in part on the responses from the APIs, a natural language answer for output at an output device.

## Description

This application claims the benefit of US Patent Application No. 19/345,909, filed 30 September 2025 and of US Provisional Application No. 63/733,859, 13 December 2024; the entire content of each of which is incorporated herein by reference.

### FIELD

The disclosure relates to computer networks, and more particularly, to root cause analysis of anomalies in computer networks.

### BACKGROUND

A computer network is a collection of interconnected computing devices that can exchange data and share resources. A variety of devices operate to facilitate communication between the computing devices. For example, a computer network may include routers, switches, gateways, firewalls, and a variety of other devices to provide and facilitate network communication.

### SUMMARY

Particular aspects are set out in the appended independent claims. Various optional embodiments are set out in the dependent claims.

Techniques are disclosed for a conversational assistant system that employs a machine learning system, such as a large language model (LLM), to intermediate between a user, who may provide natural language questions and communication, and one or more Application Programming Interfaces (APIs) implemented by a network analysis system, such as a cloud-based network analysis system. The conversational assistant system receives API definition files that include sets of function definitions and corresponding function descriptions. The conversational assistant system further receives a natural language question from a user device. In some examples, the natural language question comprises, e.g., a question about a health of a computer network, a request to perform a monitoring task upon the computer network, or a request for generated computer code with which the APIs may be invoked. The conversational assistant system processes the API definition files and the natural language question to obtain one or more function definitions that invoke one or more API endpoints of the network analysis system. The conversational assistant system sequentially invokes the one or more API functions defined by the function definitions to obtain a response from the APIs implemented by the network analysis system. The conversational assistant system generates, based at least in part on the responses from the APIs, a natural language answer for output at an output device.

The techniques of the disclosure may provide specific improvements to the computer-related field of computer networking that may have one or more practical applications. For example, the techniques of the disclosure may enable an administrator to more effectively orchestrate, manage, and monitor the different components of a computer network. In addition, the techniques of the disclosure may enable an administrator to closely monitor compliance with Service-level agreements (SLAs) at a system, network, device, and application level of the computer network, thereby providing better adherence to such SLAs. Furthermore, the techniques of the disclosure may reduce the administrative overhead of monitoring performance of various APIs within a computer network by reducing the technical complexity and understanding required to manage and monitor a wide ecosystem of APIs within a complex computer network. In addition, the techniques of the disclosure may enable an administrator to more proactively identify failures of the various components of the computer network, perform root cause analysis and troubleshooting to identify a root cause of such failures, and perform failure remediation to address the root cause of such failures.

In an example, this disclosure describes a system comprising: processing circuitry in communication with storage media, the processing circuitry configured to: obtain an Application Programming Interface (API) definition file for each of a plurality of APIs implemented by an analysis system that monitors a network system; process the API definition files for the plurality of APIs to obtain sets of first function definitions and corresponding function descriptions for respective functions; receive, from a user device, a natural language question about the network system; provide, to a machine learning system, the natural language question and the sets of first function definitions and corresponding function descriptions to obtain a list of second function definitions that define one or more functions of the plurality of APIs, wherein each second function definition of the list of second function definitions is selected from the sets of first function definitions obtained from the API definition files; for each second function definition of the list of second function definitions, sequentially invoke, based on the second function definition, a corresponding function of an API of the plurality of APIs to obtain a response from the API of the plurality of APIs; provide, to the machine learning system, the responses from the APIs of the plurality of APIs to obtain a natural language answer; and output the natural language answer.

In another example, this disclosure describes a method comprising: obtaining, by a computing system, an Application Programming Interface (API) definition file for each of a plurality of APIs implemented by an analysis system that monitors a network system; processing, by the computing system, the API definition files for the plurality of APIs to obtain sets of first function definitions and corresponding function descriptions for respective functions; receiving, by the computing system and from a user device, a natural language question about the network system; providing, by the computing system and to a machine learning system, the natural language question and the sets of first function definitions and corresponding function descriptions to obtain a list of second function definitions that define one or more functions of the plurality of APIs, wherein each second function definition of the list of second function definitions is selected from the sets of first function definitions obtained from the API definition files; for each second function definition of the list of second function definitions, sequentially invoking, by the computing system and based on the second function definition, a corresponding function of an API of the plurality of APIs to obtain a response from the API of the plurality of APIs; providing, by the computing system and to the machine learning system, the responses from the APIs of the plurality of APIs to obtain a natural language answer; and outputting, by the computing system, the natural language answer.
In another example, this disclosure describes, computer-readable media comprising instructions that, when executed, cause processing circuitry to: obtain an Application Programming Interface (API) definition file for each of a plurality of APIs implemented by an analysis system that monitors a network system; process the API definition files for the plurality of APIs to obtain sets of first function definitions and corresponding function descriptions for respective functions; receive, from a user device, a natural language question about the network system; provide, to a machine learning system, the natural language question and the sets of first function definitions and corresponding function descriptions to obtain a list of second function definitions that define one or more functions of the plurality of APIs, wherein each second function definition of the list of second function definitions is selected from the sets of first function definitions obtained from the API definition files; for each second function definition of the list of second function definitions, sequentially invoke, based on the second function definition, a corresponding function of an API of the plurality of APIs to obtain a response from the API of the plurality of APIs; provide, to the machine learning system, the responses from the APIs of the plurality of APIs to obtain a natural language answer; and output the natural language answer.

In another example, this disclosure describes a system comprising: processing circuitry in communication with storage media, the processing circuitry configured to: receive an Application Programming Interface (API) definition file for each of a plurality of APIs implemented by a network analysis system; process the API definition files for the plurality of APIs to obtain sets of first function definitions and corresponding function descriptions, the first function definitions configured for invoking API endpoints to a specific API of the plurality of APIs of the network analysis system; receive, from a user device, an input comprising a natural language description of a monitoring task to be performed upon a computer network; provide, to a machine learning system, the natural language description of the monitoring task and the sets of first function definitions and corresponding function descriptions to obtain a list of second function definitions that define one or more functions provided by the plurality of APIs of the network analysis system to implement the monitoring task, wherein each second function definition of the list of second function definitions is selected from the sets of first function definitions obtained from the API definition files; for each second function definition of the list of second function definitions, sequentially invoke, via a function corresponding to the second function definition, a corresponding API endpoint of an API of the plurality of APIs of the network analysis system to obtain a response from the API of the plurality of APIs; provide, to the machine learning system, the responses from the APIs of the plurality of APIs to obtain a natural language description of a result of the monitoring task; and output, to an output device, the natural language description.

In another example, this disclosure describes a method comprising: receiving, by processing circuitry, an Application Programming Interface (API) definition file for each of a plurality of APIs implemented by a network analysis system; processing, by the processing circuitry, the API definition files for the plurality of APIs to obtain sets of first function definitions and corresponding function descriptions, the first function definitions configured for invoking API endpoints to a specific API of the plurality of APIs of the network analysis system; receiving, by the processing circuitry, from a user device, an input comprising a natural language description of a monitoring task to be performed upon a computer network; providing, by the processing circuitry, to a machine learning system, the natural language description of the monitoring task and the sets of first function definitions and corresponding function descriptions to obtain a list of second function definitions that define one or more functions provided by the plurality of APIs of the network analysis system to implement the monitoring task, wherein each second function definition of the list of second function definitions is selected from the sets of first function definitions obtained from the API definition files; for each second function definition of the list of second function definitions, sequentially invoking, by the processing circuitry, via a function corresponding to the second function definition, a corresponding API endpoint to an API of the plurality of APIs of the network analysis system to obtain a response from the API of the plurality of APIs; providing, by the processing circuitry, to the machine learning system, the responses from the APIs of the plurality of APIs to obtain a natural language description of a result of the monitoring task; and outputting, by the processing circuitry, to an output device, the natural language description.

In another example, this disclosure describes computer-readable media comprising instructions that, when executed, cause processing circuitry to: receive an Application Programming Interface (API) definition file for each of a plurality of APIs implemented by a network analysis system; process the API definition files for the plurality of APIs to obtain sets of first function definitions and corresponding function descriptions, the first function definitions configured for invoking API endpoint to a specific API of the plurality of APIs of the network analysis system; receive, from a user device, an input comprising a natural language description of a monitoring task to be performed upon a computer network; provide, to a machine learning system, the natural language description of the monitoring task and the sets of first function definitions and corresponding function descriptions to obtain a list of second function definitions that define one or more functions provided by the plurality of APIs of the network analysis system to implement the monitoring task, wherein each second function definition of the list of second function definitions is selected from the sets of first function definitions obtained from the API definition files; for each second function definition of the list of second function definitions, sequentially invoke, via a function corresponding to the second function definition, a corresponding API endpoint of an API of the plurality of APIs of the network analysis system to obtain a response from the API of the plurality of APIs; provide, to the machine learning system, the responses from the APIs of the plurality of APIs to obtain a natural language description of a result of the monitoring task; and output, to an output device, the natural language description.

In another example, this disclosure describes a system comprising: processing circuitry in communication with storage media, the processing circuitry configured to: receive an Application Programming Interface (API) definition file for each of a plurality of APIs implemented by a network analysis system; process the API definition files for the plurality of APIs to obtain sets of first function definitions and corresponding function descriptions, the first function definitions configured for invoking API endpoints to a specific API of the plurality of APIs of the network analysis system; receive, from a user device, an input comprising a natural language request for code for invoking one or more API endpoints of the plurality of APIs of the network analysis system; provide, to a machine learning system, the natural language request and the sets of first function definitions and corresponding function descriptions to obtain a list of second function definitions that invoke the one or more API endpoints of the plurality of APIs of the network analysis system, wherein each second function definition of the list of second function definitions is selected from the sets of first function definitions obtained from the API definition files; provide, to the machine learning system, the list of second function definitions that invoke the one or more API endpoints to obtain the code for invoking one or more API endpoints of the plurality of APIs of the network analysis system and a natural language description of the code; and output, to an output device, the code and the natural language description.

In another example, this disclosure describes a method comprising: receiving, by processing circuitry, an Application Programming Interface (API) definition file for each of a plurality of APIs implemented by a network analysis system; processing, by the processing circuitry, the API definition files for the plurality of APIs to obtain sets of first function definitions and corresponding function descriptions, the first function definitions configured for invoking API endpoints to a specific API of the plurality of APIs of the network analysis system; receiving, by the processing circuitry, from a user device, an input comprising a natural language request for code for invoking one or more API endpoints of the plurality of APIs of the network analysis system; providing, by the processing circuitry, to a machine learning system, the natural language request and the sets of first function definitions and corresponding function descriptions to obtain a list of second function definitions that invoke the one or more API endpoints of the plurality of APIs of the network analysis system, wherein each second function definition of the list of second function definitions is selected from the sets of first function definitions obtained from the API definition files; providing, by the processing circuitry, to the machine learning system, the list of second function definitions that invoke the one or more API endpoints to obtain the code for invoking one or more API endpoints of the plurality of APIs of the network analysis system and a natural language description of the code; and outputting, by the processing circuitry, to an output device, the code and the natural language description.

In another example, this disclosure describes a computer-readable media comprising instructions that, when executed, cause processing circuitry to: receive an Application Programming Interface (API) definition file for each of a plurality of APIs implemented by a network analysis system; process the API definition files for the plurality of APIs to obtain sets of first function definitions and corresponding function descriptions, the first function definitions configured for invoking API endpoints of a specific API of the plurality of APIs of the network analysis system; receive, from a user device, an input comprising a natural language request for code for invoking one or more API endpoints of the plurality of APIs of the network analysis system; provide, to a machine learning system, the natural language request and the sets of first function definitions and corresponding function descriptions to obtain a list of second function definitions that invoke the one or more API endpoints of the plurality of APIs of the network analysis system, wherein each second function definition of the list of second function definitions is selected from the sets of first function definitions obtained from the API definition files; provide, to the machine learning system, the list of second function definitions that invoke the one or more API endpoints to obtain the code for invoking one or more API endpoints of the plurality of APIs of the network analysis system and a natural language description of the code; and output, to an output device, the code and the natural language description.

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a block diagram illustrating an example network system including a network analysis system that includes a conversational assistant, in accordance with one or more aspects of the techniques described in this disclosure.
FIG. 2 is a block diagram illustrating a system in accordance with aspects of the disclosure.
FIG. 3 is a block diagram illustrating a root cause analysis pipeline, in accordance with aspects of the disclosure.
FIG. 4A is a block diagram illustrating an example network node, in accordance with the techniques described in this disclosure.
FIG. 4B is a block diagram illustrating an example computing system, in accordance with the techniques described in this disclosure.
FIG. 5 is a block diagram illustrating an example system for initializing a machine learning system to invoke API endpoints of a network system, in accordance with the techniques of the disclosure.
FIG. 6 is a block diagram illustrating an example implementation of a conversational assistant system for invoking API endpoints of a network system, in accordance with the techniques of the disclosure.
FIG. 7 is a flowchart illustrating an example operation in accordance with the techniques of the disclosure.
FIG. 8 is a flowchart illustrating an example operation in accordance with the techniques of the disclosure.
FIG. 9 is a flowchart illustrating an example operation in accordance with the techniques of the disclosure.
FIG. 10 is a flowchart illustrating an example operation in accordance with the techniques of the disclosure.

Like reference characters denote like elements in the figures and text.

### DETAILED DESCRIPTION

Techniques are disclosed for a conversational assistant that employs a machine learning system, such as an LLM, to act as an intermediary between a user, who may provide natural language questions and communication, and one or more APIs implemented by a network analysis system. In some examples, the APIs implemented by the network analysis system are REpresentational State Transfer (REST) APIs or g-Remote Procedure Call (gRPC) interfaces. In some examples, the one or more APIs implemented by the network analysis system are configured to generate performance and monitoring data for a computer network system along a plurality of different dimensions monitored by the network analysis system.

In some examples, a system receives, as an input, an API definition file. In some examples, the API definition file is a Swagger Doc or an OpenAPI specification. The system processes the API definition file to generate client libraries for one or more APIs for the network analysis system, each of the client libraries comprising function definitions for invoking API endpoints of a corresponding API and corresponding function descriptions.

The system receives, from a user device, a query comprising a natural language question about one or more REST APIs implemented by the network analysis system. Typically, the user query may require information drawn from multiple calls to different APIs of the network analysis system to generate an answer. The system applies an LLM to the natural language question, the function definitions, and the corresponding function descriptions of the one or more APIs to obtain one or more function definitions that invoke API endpoints of the one or more APIs of the network analysis system. The system iteratively performs the functions corresponding to the function definitions to receive an output from the corresponding API call to the one or more APIs of the network analysis system. In some examples, the system applies an output of a previous API call as an input to a subsequent API call.

The LLM generates, from the information obtained from the API calls and the function descriptions of the corresponding function definitions, a natural language answer to the user's query. In some examples, the system may employ multiple agents or LLMs, e.g., a first LLM which generates the natural language answer to the user's query, and a second LLM which verifies the answer to be coherent, responsive, etc. The system outputs the natural language answer for display to the user.

In some examples, the API definition file is enhanced with additional data from the user query that specifies one or more endpoints of interest. For example, a user may want only a "read" operation from a set of Create, Read, Update and Delete (CRUD) operations of an API. In this example, the API definition file is enhanced with metadata that specifies endpoints of interest to a user. In some examples, the metadata may specify "aliasing" of parameters, such as one or more alternate or interchangeable terms or parameters which may be more relevant to an API than the particular term provided in the natural language question by the user.

In the foregoing example, a user provided a natural language question about the APIs implemented by the network analysis system. However, in other implementations, the user may provide a natural language description of a monitoring task. For example, a user may request to "monitor instances of device CPU exceeding 90% utilization, and to receive reports of such instances at 5 minute intervals according to a particular blueprint format," or "if any link errors of a device 'leaf1' from a particular blueprint occur, report the services affected." The LLM may process the natural language description of a monitoring task with the function definitions and the corresponding function descriptions of the one or more APIs to obtain one or more function definitions that invoke API endpoints of the one or more APIs of the network analysis system that implement the monitoring task. The system may perform the functions, defined by the function definitions, that implement the monitoring task, and the LLM generates, from the information obtained from the API calls and the function descriptions of the corresponding function definitions, a natural language description of the results of the monitoring task, which is output for display to the user. In some examples, the system may store feedback from the user regarding the natural language description of the results of the monitoring task, and optionally create a ticket based on the feedback.

In yet another example, the user may provide a natural language request for automatically-generated code. The natural language request may specify the desired operation of the code as well as existing context for the code. The LLM may process the natural language request with the function definitions and the corresponding function descriptions of the one or more APIs to generate code that includes one or more function definitions that invoke API endpoints of the one or more APIs of the network analysis system. The system outputs the generated code for display to the user. In some examples, the system may implement two LLMs, such as a first LLM which obtains the one or more function definitions that invoke API endpoints of the one or more APIs of the network analysis system and a second LLM which processes the information obtained from the API calls to generate the natural language answer for display to the user.

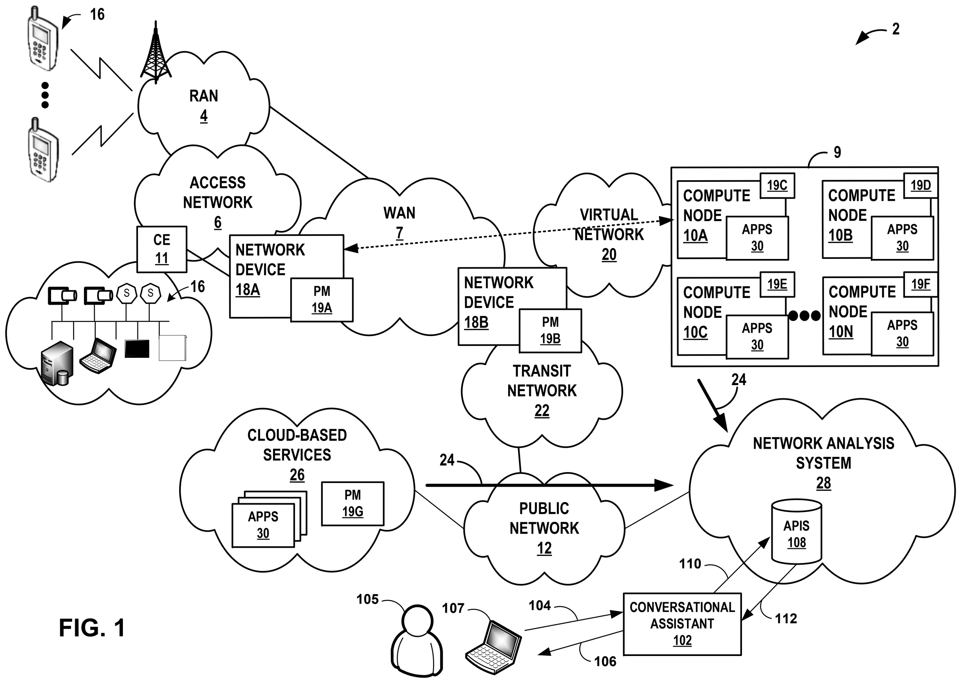

FIG. 1 is a block diagram illustrating example network system 2 including a network analysis system 28 that includes conversational assistant 102, in accordance with one or more aspects of the techniques described in this disclosure. Network system 2 may provide packet-based network services to subscriber devices 16. That is, network system 2 may provide authentication and establishment of network access for subscriber devices 16 such that a subscriber device may begin exchanging data packets with public network 12, which may be an internal or external packet-based network such as the Internet.

In the example of FIG. 1, network system 2 comprises access network 6 that provides connectivity to public network 12 via wide area network 7 (hereinafter, "WAN 7"). WAN 7 and public network 12 may provide packet-based services that are available for request and use by subscriber devices 16. As examples, WAN 7 and/or public network 12 may provide bulk data delivery, voice over Internet protocol (VoIP), Internet Protocol television (IPTV), Short Messaging Service (SMS), Wireless Application Protocol (WAP) service, or customer-specific application services. Public network 12 may comprise, for instance, a local area network (LAN), a wide area network (WAN), the Internet, a virtual LAN (VLAN), an enterprise LAN, a layer 3 virtual private network (VPN), an Internet Protocol (IP) intranet operated by the service provider that operates access network 6, an enterprise IP network, or some combination thereof. In various examples, public network 12 is connected to a public WAN, the Internet, or to other networks. Public network 12 executes one or more packet data protocols (PDPs), such as IP (IPv4 and/or IPv6), X.25 or Point-to-Point Protocol (PPP), to enable packet-based transport of public network 12 services.

In general, subscriber devices 16 connect to network devices 18A-18B (collectively, "network devices 18") via access network 6 to receive connectivity to subscriber services for applications hosted by public network 12. A subscriber may represent, for instance, an enterprise, a residential subscriber, or a mobile subscriber. Subscriber devices 16 may be, for example, personal computers, laptop computers or other types of computing devices positioned behind customer equipment (CE) 11, which may provide local routing and switching functions. Each of subscriber devices 16 may run a variety of software applications, such as word processing and other office support software, web browsing software, software to support voice calls, video games, video conferencing, and email, among others. For example, subscriber device 16 may be a variety of network-enabled devices, referred generally to as "Internet-of-Things" (IoT) devices, such as cameras, sensors (S), televisions, appliances, etc. In addition, subscriber devices 16 may comprise mobile devices that access the data services of network system 2 via a radio access network (RAN) 4. Example mobile subscriber devices include mobile telephones, laptop or desktop computers having, e.g., a wireless card, wireless-capable netbooks, tablets, video game devices, pagers, smart phones, personal data assistants (PDAs) or the like.

A network service provider operates, or in some cases leases, elements (e.g., network devices - not shown in the example of FIG. 1) of access network 6 to provide packet transport between subscriber devices 16 and network device 18A. Access network 6 represents a network that aggregates data traffic from one or more of subscriber devices 16 for transport to/from WAN 7 of the service provider. Access network 6 includes network nodes that execute communication protocols to transport control and user data to facilitate communication between subscriber devices 16 and network device 18A. Access network 6 may include a broadband access network, a wireless LAN, a public switched telephone network (PSTN), a customer premises equipment (CPE) network, or other type of access network, and may include or otherwise provide connectivity for cellular access networks, such as a radio access network (RAN), e.g., RAN 4. Examples of the RAN include networks conforming to a 5^{th} Generation (5G) mobile network, 4^{th} Generation (4G) mobile network Universal Mobile Telecommunications System (UMTS) architecture, an evolution of UMTS referred to as Long Term Evolution (LTE), 5G including enhanced mobile broadband, mobile IP standardized by the Internet Engineering Task Force (IETF), as well as other standards proposed by the 3^{rd} Generation Partnership Project (3GPP), 3^{rd} Generation Partnership Project 2 (3GGP/2) and the WiMAX forum.

Network device 18 may each be a customer edge (CE) router, a provider edge (PE) router, SD-WAN edge device, service device, network appliance, a server executing virtualized network functions, or other computing device that provides connectivity between networks, e.g., access network 6 and public network 12, or network services. WAN 7 offers packet-based connectivity to subscriber devices 16 attached to access network 6 for accessing public network 12 (e.g., the Internet). WAN 7 may represent a public network that is owned and operated by a service provider to interconnect a plurality of networks, which may include access network 6. In some examples, WAN 7 may implement Multi-Protocol Label Switching (MPLS) forwarding and in such instances may be referred to as an MPLS network or MPLS backbone. In some instances, WAN 7 represents a plurality of interconnected autonomous systems, such as the Internet, that offers services from one or more service providers. Public network 12 may represent the Internet. Public network 12 may represent an edge network coupled to WAN 7 via a transit network 22 and one or more network devices, e.g., a customer edge device such as customer edge switch or router. Public network 12 may include a data center. In the example of FIG. 1, network device 18B may exchange packets with compute nodes 10A-10D ("compute nodes 10") via virtual network 20, and network device 18B may forward packets to public network 12 via transit network 22.

In examples of network system 2 that include a wireline/broadband access network, network devices 18A or 18B may represent a Broadband Network Gateway (BNG), Broadband Remote Access Server (BRAS), MPLS PE router, core router or gateway, or Cable Modem Termination System (CMTS). In examples of network system 2 that include a cellular access network as access network 6, network devices 18A or 18B may represent a mobile gateway, for example, a Gateway General Packet Radio Service (GPRS) Serving Node (GGSN), an Access Gateway (aGW), or a Packet Data Network (PDN) Gateway (PGW). In other examples, the functionality described with respect to network device 18B may be implemented in a switch, service card or another network element or component. In some examples, network device 18B may itself be a service node.

A network service provider that administers at least parts of network system 2 typically offers services to subscribers associated with devices, e.g., subscriber devices 16, that access network system 2. Services offered may include, for example, traditional Internet access, VoIP, video and multimedia services, and security services. As described above with respect to WAN 7, WAN 7 may support multiple types of access network infrastructures that connect to service provider network access gateways to provide access to the offered services, e.g., service provided by service node 10. In some instances, the network system may include subscriber devices 16 that attach to multiple different access networks 6 having varying architectures.

In general, any one or more of subscriber devices 16 may request authorization and data services by sending a session request to a gateway device such as network devices 18A or 18B. In turn, the network device may access a central server (not shown) such as an Authentication, Authorization and Accounting (AAA) server to authenticate the one of subscriber devices 16 requesting network access. Once authenticated, any of subscriber devices 16 may send subscriber data traffic toward WAN 7 to access and receive services provided by public network 12, and such packets may traverse network devices 18A or 18B as part of at least one packet flow. In some examples, network device 18A may forward all authenticated subscriber traffic to public network 12, and network device 18B may apply services and/or steer particular subscriber traffic to data center 9 if the subscriber traffic requires services on compute nodes 10. Service applications to be applied to the subscriber traffic may be hosted on compute nodes 10.

For example, network system 2 includes a data center 9 having a cluster of compute nodes 10 that provide an execution environment for the virtualized network services. In some examples, each of compute nodes 10 represents a service instance. Each of compute nodes 10 may apply one or more services to traffic flows. As such, network device 18B may steer subscriber packet flows through defined sets of services provided by compute nodes 10. That is, in some examples, each subscriber packet flow may be forwarded through a particular ordered combination of services provided by compute nodes 10, each ordered set being referred to herein as a "service chain." As examples, compute nodes 10 may apply stateful firewall (SFW) and security services, deep packet inspection (DPI), carrier grade network address translation (CGNAT), traffic destination function (TDF) services, media (voice/video) optimization, Internet Protocol security (IPSec)/virtual private network (VPN) services, hypertext transfer protocol (HTTP) filtering, counting, accounting, charging, and/or load balancing of packet flows, or other types of services applied to network traffic.

In some examples, network system 2 comprises a software defined network (SDN) and network functions virtualization (NFV) architecture. In these examples, an SDN controller (not shown) may provide a controller for configuring and managing the routing and switching infrastructure of network system 2.

Although illustrated as part of data center 9, compute nodes 10 may be network devices coupled by one or more switches or virtual switches of WAN 7. In one example, each of compute nodes 10 may run as virtual machines (VMs) in a virtual compute environment. Moreover, the compute environment may comprise a scalable cluster of general computing devices, such as x86 processor-based services. As another example, compute nodes 10 may comprise a combination of general-purpose computing devices and special-purpose appliances. As virtualized network services, individual network services provided by compute nodes 10 can scale just as in a modern data center through the allocation of virtualized memory, processor utilization, storage and network policies, as well as horizontally by adding additional load balanced VMs. In other examples, compute nodes 10 may be gateway devices or other routers. In further examples, the functionality described with respect to each of compute nodes 10 may be implemented in a switch, service card, or another network element or component.

Subscriber devices 16 may be configured to utilize the services provided by one or more of applications 30 hosted on servers that are part of cloud-based services 26. In some aspects, cloud-based services 26 may be provided from one or more datacenters, including datacenter 9 by way of compute nodes 10. An application 30 may be configured to provide a single service, or it may be configured as multiple microservices. For purposes of illustration, it is assumed that application 30 is configured as multiple microservices. A subscriber device 16 can utilize the services of an application 30 by communicating requests to the application 30 and receiving responses from the application 30 via public network 12. In some aspects, applications 30 may be containerized applications (or microservices). Containerization is a virtualization scheme based on operating system-level virtualization. Containers are light-weight and portable execution elements for applications that are isolated from one another and from the host. Such isolated systems represent containers, such as those provided by the open-source DOCKER Container application or by CoreOS Rkt ("Rocket"). Like a virtual machine, each container is virtualized and may remain isolated from the host machine and other containers. However, unlike a virtual machine, each container may omit an individual operating system and instead provide an application suite and application-specific libraries. In general, a container is executed by the host machine as an isolated user-space instance and may share an operating system and common libraries with other containers executing on the host machine. Thus, containers may require less processing power, storage, and network resources than virtual machines. A group of one or more containers may be configured to share one or more virtual network interfaces for communicating on corresponding virtual networks.

Because containers are not tightly-coupled to the host hardware computing environment, an application can be tied to a container image and executed as a single light-weight package on any host or virtual host that supports the underlying container architecture. As such, containers address the problem of how to make software work in different computing environments. Containers offer the promise of running consistently from one computing environment to another, virtual or physical.

As described herein, computing devices within network system 2 may provide network monitoring services. For example, network devices 18 and/or compute nodes 10 are configured as measurement points (e.g., with probe modules) to provide network monitoring services to determine, for example, network performance and functionality, as well as interconnections of service chains. Probe modules may provide telemetry data (e.g., in the form of time series data, which may also be referred to as "time series data") that can be used to determine health of some or all of network system 2. Probe modules may be implemented as plugin modules provided as part of a cloud as a Software-as-a-Service (SaaS) solution, software deployed on premises in NFV environments, software modules installed to host computing devices, or other implementations. Computing devices configured with probe modules may send and/or receive test packets to compute one or more key performance indicators (KPIs) of the network, such as latency, delay (inter frame gap), jitter, packet loss, throughput, and the like. Probe modules may send test packets in accordance with various protocols, such as Hypertext Transfer Protocol (HTTP), Internet Control Message Protocol (ICMP), Speedtest, User Datagram Protocol (UDP), Transmission Control Protocol (TCP), Operations, Administration and Maintenance (OAM) functions (e.g., Y.1731), Two-Way Active Measurement Protocol (TWAMP), Internet Protocol television (IPTV) and Over the Top (OTT) protocol, VoIP telephony and Session Initiation Protocol (SIP), mobile radio, remote packet inspection, and other protocols to measure network performance. Probe modules on compute nodes may calculate KPIs related to resource utilization, such as CPU utilization, memory utilization, etc.

In the example of FIG. 1, network device 18A is configured with probe module ("PM") 19A ("PM 19A"), network device 18B is configured with probe module 19B ("PM 19B"), compute node 10A is configured with probe module 19C ("19C"), compute node 10B is configured with probe module 19D ("19D"), compute node 10C is configured with probe module 19E ("19E"), compute node 10D is configured with probe module 19F ("19F"), and at least one application 30 of cloud-based services 26 is configured with probe module 19G ("PM 19G"). Although each of network devices 18 and compute nodes 10 are described as being configured with a probe module, any number of network devices and/or service nodes may be configured with probe modules to provide monitoring services. Probe modules 19A-19G are referred to collectively as "probe modules 19." Probe modules 19 can produce and/or collect performance statistics (e.g., KPIs) regarding application and network performance.

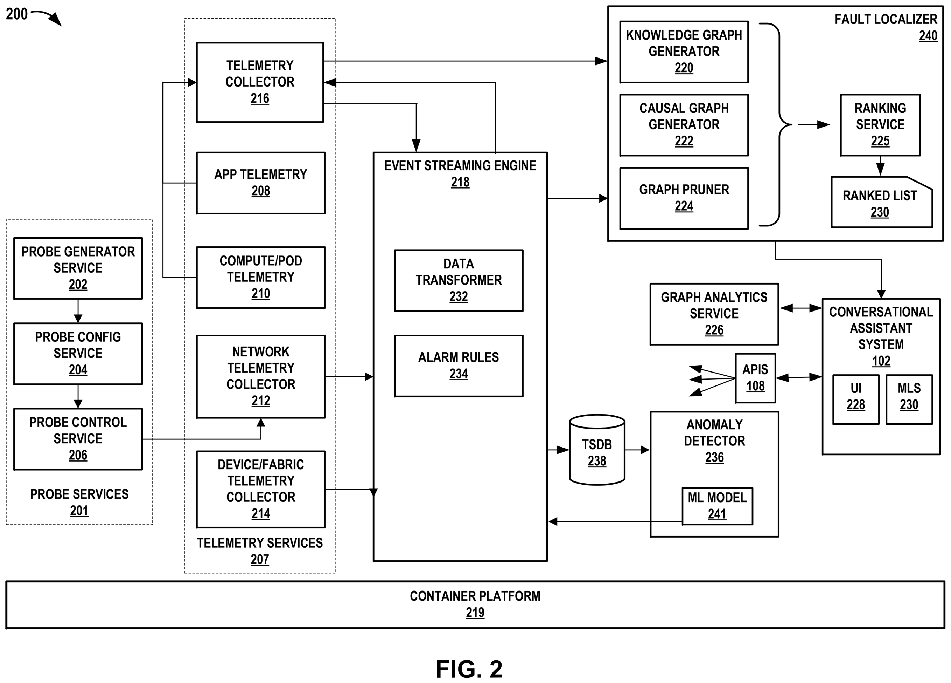

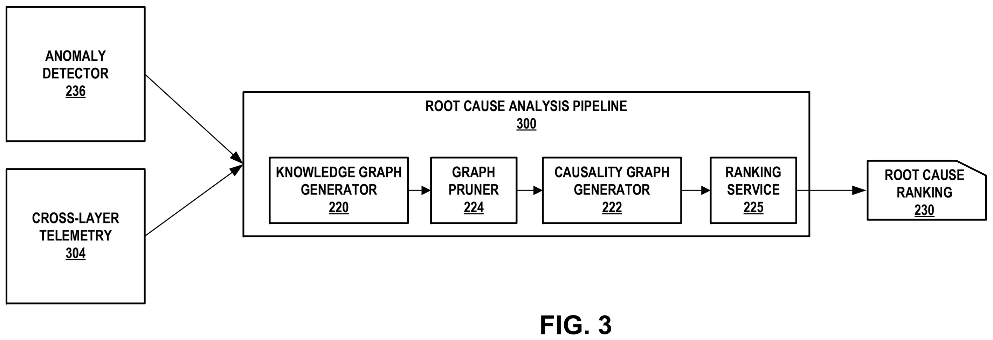

Probe modules 19 and other devices and services send their KPIs 24 to network analysis system 28 as a time series data. Network analysis system 28 can receive KPIs and other data from probe modules 19, and use the received data to detect anomalies in network and/or compute node operation. In some aspects, network analysis system 28 can be implemented, at least in part, as a containerized framework system. Further details on the processing of the time series of data are provided below with respect to FIGS. 2 and 3.

Additional information regarding network analysis system 28 may be found within U.S. Patent Pub. No. 2024/0007342, entitled "FRAMEWORK FOR AUTOMATED APPLICATION-TO-NETWORK ROOT CAUSE ANALYSIS," which was filed on June 30, 2023 and published on January 4, 2024, the entire content of which is incorporated by reference herein. Network analysis system 28 of U.S. Patent Pub. No. 2024/0007342 is an example of analysis system 28 described in this disclosure.

In accordance with the techniques of the disclosure, system 2 includes conversational assistant system 102, which employs a machine learning system, such as an LLM, to act as an intermediary between a user, such as an administrator, who may provide natural language questions and communication, and one or more APIs 108 implemented by network analysis system 28. Each of APIs 108 provide a framework for communicating with a corresponding application provided by network system 2. An API of APIs 108 may expose API endpoints, through which other applications may invoke one or more functions provided by the API. As described herein, an application may cause an API to perform a particular function by invoking an API endpoint of the API, which may also be referred to as invoking a function or performing an API call. Each function provided by an API may be defined by a function definition and described by a function description.

A function definition describes a function (e.g., an operation or method) that a corresponding API may perform in response to a request to invoke the function via an API endpoint. The function definition further describes what arguments or parameters the API expects to be provided as part of the request to invoke the operation, as well as the format of the request to invoke the function. In some examples, the function definition provides a name for the function. Typically, the function definition is provided in code or pseudo-code to illustrate the proper invocation of the operation. An application may invoke the API to perform a particular function by performing an API call in accordance with the function definition for the particular function.

A function description provides a human-readable or natural language explanation of the function definition, and typically accompanies the function definition. The function description provides context and explanation for the proper use of the function, the function definition, various parameters that may be used when invoking the function, etc.

As described in more detail below, conversational assistant system 102 receives API definition files that include sets of function definitions and corresponding function descriptions for APIs implemented by network analysis system 28. Conversational assistant system 102 receives, via an input device (such as user device 107), natural language question 104 from a user 105, such as an administrator of network analysis system 28. In some examples, natural language question 104 comprises, e.g., a question about a health of network system 2, a request to perform a monitoring task upon network system 2, or a request for generated computer code with which the APIs 108 of network system 2 may be invoked. Conversational assistant system 102 processes the API definition files and natural language question 104 to obtain one or more function definitions 110 that invoke one or more API endpoints of APIs 108 of network analysis system 28. Conversational assistant system 102 sequentially invokes the one or more function definitions 110 to obtain a response 112 from the APIs implemented by network analysis system 28. Conversational assistant system 102 generates, based at least in part on the responses from the APIs, natural language answer 106 for output at an output device.

FIG. 2 is a block diagram illustrating system 200 in accordance with aspects of the disclosure. System 200 can be implemented as part of network analysis system 28 (FIG. 1). In some aspects, system 200 includes probe services 201, telemetry services 207, telemetry collector 216, event streaming engine 218, and fault localizer 240.

Probe services 201 include services that create, configure, and/or control probe modules that collect network telemetry data (e.g., probe modules 19 of FIG. 1). In some aspects, probe services 201 can include probe generator service 202, probe configuration service 204 and probe control service 206. Probe generator service 202 analyzes a network configuration, and can generate probe modules that are adapted for particular network devices or types of network devices (both physical and virtual) that may be present in network analysis system 28.

Probe configuration service 204 can configure probe modules generated by probe generation service 202 for execution on network system 2. Probe control service 206 can deploy probe modules and monitor the execution of probe modules (e.g., probe modules 19).

Probe generator service 202 is responsible for determining a set of network probe modules that need to be configured for a given network which is determined based on the network topology and corresponding application placement in the network. Probe generator service 202 can receive a network topology and an application location as an input, and can determine a set of network probe modules that can obtain performance measurements related to the application. The set of network probe modules generated by probe generator service is localized to the portion of the network topology used to communicate network traffic of the application.

Depending on the environment, network probe modules of different types may need to be generated. For example, if an application has specific QoS requirement, then probe modules to detect specific QoS bits ,e.g., DSCP bits in an IP header need to be generated to actively measure performance of the network from the application perspective. Moreover, there are different types of topologies, e.g., underlay network, overlay network, Kubernetes Clusters, etc., for which probe modules need to be generated. Depending on the topology, different probe generator plugins may be supported which are responsible for determining a set of probe modules while considering application needs, coverage, and cost for active probing for a given topology. Example of different plugins include CLOS datacenter network topology plugin, Overlay network plugin, SD-WAN topology plugin, Kubernetes cluster plugin, etc. In some aspects, probe modules are only generated for that portion of the network topology that is used by the application.

Independent of the input topology or application mapping to network regions, different probe generation service 202 adapters can have a consistent format to represent probe modules that need to be configured. It is a represented as source server with a pointer to a list of destination servers for the probe module. Note here that a server can be a bare-metal server, VM, or container depending on the topology.
server1_uuid : [server2_uuid, server3_uuid]
server2_uuid: [server4_uuid]
server3_uuid: [server1_uuid, server4_uuid]

After a probe module that needs to be configured is determined, probe generation service 202 can publish a definition for the probe module on message bus 2116. The probe definition may be persisted in probe definition database 2138. Probe definition database 2138 can store the probe definitions should it be desirable to perform analysis of a probe definition to determine if it was correctly generated, and if the probe modules were properly configured and pushed to their ultimate destination. Further, probe definitions database 2138 can store a state of probe generation, configuration, and distribution. If it later becomes desirable to disable a probe module, information in probe definitions database can be used to properly disable the probe module and update the state of probe distribution for an application.

There may be many types of probe modules available in a network system. In some cases, device or system manufacturers may provide probe modules that are proprietary to their devices. In other cases, probe modules for a device or component may be available via open source or other mechanism. Probe configuration service 204 can receive a probe definition and is responsible for translating the desired probe intent (as expressed in the probe definition) to a specific probe configuration based on the actual probe service. In some aspects, probe configuration service 204 can have a plugin architecture, where plugins can adapt the probe configuration services for a particular type of probe module.

In some aspects, a probe module is associated with the application. The system can use such associations to determine applications that may be affected by an anomaly detected by the system. For example, assume a probe module returns telemetry data that indicates an anomaly. The system can identify the application associated with the probe module as potentially being affected by the anomaly.

In some aspects, probe configuration service 204 can send the probe configuration data directly to the appropriate probe modules. In some aspects, probe configuration service can send the probe configurations to probe control services 206, which in turn can send the probe configurations to their appropriate probe modules.

In this respect, various aspects of the techniques described above, enable the network system to determine a topology graph for a network, where the topology graph representing a plurality of logical layers of the network. A topology service may determine, based on the topology graph, a subgraph of the topology graph based on a location, in the topology graph, of a node representing a compute node that is a host of the application. Probe generation service 202 may determine, based on the subgraph, a set of one or more probe modules to measure performance metrics associated with network communication associated with the application, and for each of the one or more probe modules, generate configuration data corresponding to a type of the probe module. Probe generator service 202 may output, to the probe module, the configuration data corresponding to the probe module.

Telemetry services 207 includes services that collect telemetry from probe modules across multiple layers of networked system such as system 2 of FIG. 1. As used herein, a layer can refer to a set of components (real or virtual) that use resources and services provided by another set of components at a different layer. In cases where a first component uses resources or services of a second component, the first component can be said to be dependent on the second component. For example, applications at an application layer may use resources and services of a compute node at a compute node layer. The compute node layer may, in turn, use resources and services provided by network devices at a network layer, and so on. Thus, applications at the application layer are dependent on compute nodes at a compute node layer, which in turn, may be dependent on physical network devices at the physical layer.

In some aspects, telemetry services 207 include telemetry collector 216, network telemetry collector 212, and device/fabric telemetry collector 214. Telemetry collector 216 can collect application telemetry 208 such as application performance data. Application telemetry may be collected using service-mesh, Istio, etc. Telemetry collector 216 can also collect compute/pod telemetry 210. Compute/pod telemetry 210 can include Kubernetes pod and node performance telemetry data such as central processor unit (CPU) usage, memory usage, network statistics, etc. In some aspects, telemetry collector 212 can be implemented using the Prometheus monitoring system combined with the Thanos high availability and data storage systems. Both Prometheus and Thanos are open source components.

Network telemetry collector 212 can collect telemetry data that measure end-to-end network performance. For example, network telemetry collector 212 can collect network performance measurements obtained or created by probe modules 19. Device/fabric telemetry collector 214 can collect telemetry data from network devices in a network fabric of network system 2 (e.g., network devices 18).

Event streaming engine 218 can receive telemetry data collected by telemetry services 207 such as telemetry collector 216, network telemetry collector 212, device telemetry collector 214 and others, and can store the data as time series data in time series database (TSDB) 238. The data received from telemetry services 207 may be in different formats depending on the source of the telemetry data and the collector used to collect the telemetry data. In some aspects, data transformer 232 apply data transforms to input data to normalize the data and/or to put the data into a standardized format. In some aspects, the data is transformed to an openTSDB format. In some aspects, event streaming engine 218 may be implemented, at least in part, using the Kafka stream processing system.

Event streaming engine may apply alarm rules 234 to the incoming telemetry data. Alarm rules 234 can be a set of one or more rules that indicate telemetry values that are anomalous, e.g., outside of desired ranges, over or under limits, etc.

Anomaly detector 236 can apply machine learning (ML) model 240 to time series of telemetry data from TSDB 238 to determine anomalous conditions related to the time series of telemetry data. In some aspects, ML model 240 can be trained using supervised or unsupervised learning techniques to discover relationships between KPIs in telemetry data and anomalous conditions within one or more layers of a multi-layered network system such as system 2 of FIG. 1. These relationships can be across multiple layers of the network model. For example, KPIs that are associated with a network device can be related to KPIs of an application that utilizes the network device to communicate with another service. As an example, KPIs that indicate a bottleneck at a network device or CPU overload on a host device can affect response time KPIs of an application that runs on the host and/or utilizes the network device for communication with another endpoint in the network.

Telemetry services 207 includes services that collect telemetry from probe modules across multiple layers of networked system such as system 2 of FIG. 1. As used herein, a layer can refer to a set of components (real or virtual) that use resources and services provided by another set of components at a different layer. In cases where a first component uses resources or services of a second component, the first component can be said to be dependent on the second component. For example, applications at an application layer may use resources and services of a compute node at a compute node layer. The compute node layer may, in turn, use resources and services provided by network devices at a network layer, and so on. Thus, applications at the application layer are dependent on compute nodes at a compute node layer, which in turn, may be dependent on physical network devices (e.g., compute nodes 10 shown in the example of FIG. 1) at the network physical layer.

In some aspects, telemetry services 207 include telemetry collector 216, network telemetry collector 212, and device/fabric telemetry collector 214. Telemetry collector 216 can collect application telemetry 208 such as application performance data. Application telemetry may be collected using service-mesh, Istio, etc. Telemetry collector 216 can also collect compute/pod telemetry 210. Compute/pod telemetry 210 can include Kubernetes pod and node performance telemetry data such as central processor unit (CPU) usage, memory usage, network statistics, etc. In some aspects, telemetry collector 212 can be implemented using the Prometheus monitoring system combined with the Thanos high availability and data storage systems. Both Prometheus and Thanos are open source components.

Network telemetry collector 212 can collect telemetry data that measure end-to-end network performance. For example, network telemetry collector 212 can collect network performance measurements obtained or created by probe modules 19.

Device/fabric telemetry collector 214 can collect telemetry data from network devices in a network fabric of network system 2 (e.g., network devices 18).

Event streaming engine 218 can receive telemetry data collected by telemetry services 207 such as telemetry collector 216, network telemetry collector 212, device telemetry collector 214 and others, and can store the data as time series data in time series database (TSDB) 238. The data received from telemetry services 207 may be in different formats depending on the source of the telemetry data and the collector used to collect the telemetry data. In some aspects, data transformer 232 apply data transforms to input data to normalize the data and/or to put the data into a standardized format. In some aspects, the data is transformed to an openTSDB format. In some aspects, event streaming engine 218 may be implemented, at least in part, using the Kafka stream processing system.

Event streaming engine may apply alarm rules 234 to the incoming telemetry data. Alarm rules 234 may represent a set of one or more rules that indicate telemetry values that are anomalous, e.g., outside of desired ranges, over or under limits, etc.

Anomaly detector 236 can apply machine learning (ML) model 241 to time series of telemetry data from TSDB 238 to determine anomalous conditions related to the time series of telemetry data. In some aspects, ML model 241 can be trained using supervised or unsupervised learning techniques to discover relationships between KPIs in telemetry data and anomalous conditions within one or more layers of a multi-layered network system such as system 2 of FIG. 1. These relationships can be across multiple layers of the network model. For example, KPIs that are associated with a network device can be related to KPIs of an application that utilizes the network device to communicate with another service. As an example, KPIs that indicate a bottleneck at a network device or CPU overload on a host device can affect response time KPIs of an application that runs on the host and/or utilizes the network device for communication with another endpoint in the network.

Anomaly detector 236 may invoke fault localizer 240 when a fault (e.g., an anomalous condition) is detected using alarm rules or detected using ML model 241. In some aspects, fault localizer 240 includes knowledge graph generator 220, causal graph generator 222, graph pruner 224 and ranking service 225. In some aspects, knowledge graph generator 220, causal graph generator 222, graph pruner 224, and ranking service 225 may be executed as part of a root cause analysis pipeline, an example of which is shown in FIG. 3.

Knowledge graph generator 220 can generate, based on data in TSDB 238 and relationships discovered in ML model 241, dependencies between different application and infrastructure entities of network system 2. Causal graph generator 222 generates further graph data on top of a knowledge graph generated by knowledge graph generator 220 to form a causal graph. The causal graph captures causal relationships between different performance KPIs and anomalous conditions. Graph pruner 224 prunes the knowledge graph and causal graph to determine a subset of the graphs to be used in root cause localization. Ranking service 225 ranks the nodes in the causal graph and to indicate the nodes that are likely to be the root cause of an observed anomaly in the order of likelihood that the node caused the anomaly.

System 200 may further include graph analytics service 226 and conversational assistant system 102. Graph analytics system 226 can receive graph queries on the knowledge and causality graph for further investigation and validation of fault localization results. In some aspects, graph analytics system 226 can be used to perform alarm propagation path analysis, graph change analysis, fault injection analysis, or application-to-network mapping analysis.

Conversational assistant system 102 includes user interface (UI) 228 and machine learning system 230. UI 228 may comprise, for example, one or more input and output devices with which a user may interact with conversational assistant system 102 to provide inputs and receive outputs. In some examples, UI 228 includes one or more of a command-line interface (CLI), a graphical user interface (GUI), a browser interface, or a voice UI.

In some examples, the one or more input devices of UI 228 include one or more of a communication device such as a network interface, keyboard, pointing device, voice responsive system, video camera, biometric detection/response system, button, sensor, mobile device, control pad, microphone, presence-sensitive screen, network, or any other type of device for detecting input from a human or machine.

In some examples, the one or more output devices of UI 228 include a communication unit such as a network interface, display, sound card, video graphics adapter card, speaker, presence-sensitive screen, one or more USB interfaces, video and/or audio output interfaces, or any other type of device capable of generating tactile, audio, video, or other output. In some examples, a display device of UI may include one or more liquid crystal displays (LCD), quantum dot display, dot matrix displays, light emitting diode (LED) displays, organic light-emitting diode (OLED) displays, cathode ray tube (CRT) displays, e-ink, or monochrome, color, or any other type of display capable of generating tactile, audio, and/or visual output. In some examples, UI 228 includes a presence-sensitive display that serves as a user interface device that operates both as one or more input devices and one or more output devices.

In some examples, machine learning system 230 includes one or more AI models. Examples of machine learning system 230 may include a Large Language Model (LLM), a Small Language Model (SLM),a deep learning model, or other type of generative AI. In some examples, machine learning system 230 may alternatively or additionally implement one or more Recurrent Neural Networks (RNNs), Convolutional Neural Networks (CNNs), Decision Tree-Based Models, or Long Short-Term Memory (LSTM) models. Machine learning system 230 is depicted as a component of conversational assistant system 102 in the example of FIG. 2. However, in some implementations, machine learning system 230 is implemented in a separate computing system, distributed across one or more computer networks (such as a cloud network), and/or provided by a third-party. Examples of such third-party machine learning systems or AI models, hosted in a separate computing system, with which conversational assistant system 102 may interact to perform the techniques of the disclosure are, for example, CHATGPT available from OPENAI, BERT available from GOOGLE, GROK available from XAI, CLAUDE available from ANTHROPIC, GEMINI available from GOOGLE, LLAMA available from META, etc.

Conversational assistant system 102 receives API definition files that include sets of first function definitions and corresponding function descriptions, the first function definitions configured for invoking API endpoints of a specific API of the plurality of APIs 108 of network analysis system 28. In the example of FIG. 1, APIs 108 are APIs for network analysis system 28, which provides root-cause analysis of network 2. In other examples, APIs may be APIs for one or more network nodes, network management systems (NMS), element management systems (EMS), network controllers, a Radio Access Network (RAN) Intelligent Controller (RIC), network analysis systems, monitoring systems, etc. In some examples, the APIs 108 implemented by network analysis system 28 or other APIs comprise a plurality of REpresentational State Transfer (REST) APIs or g-Remote Procedure Call (gRPC) interfaces.

An API definition file is a structured file that describes the details of an API, such as a RESTful API. The API definition file may provide both humans and machines with a clear understanding of how an API works. Typically, the API definition file is written in either JavaScript Object Notation (JSON) or Yet Another Markup Language (YAML) format. In some examples, the API definition file comprises a Swagger document. In some examples, the API definition file adheres to the OpenAPI Specification (OAS). The API definition file provides information about available API endpoints, expected inputs to invoke an API function, and outputs of the API function.

The API definition file typically includes metadata such as an API title, version, description, and server information, defines API endpoints, and supported HTTP methods. For each API endpoint, the API definition file specifies one or more parameters (query, path, header, or body), request formats, authentication requirements, and response structures, including possible HTTP status codes and example payloads. Conventionally, an API definition file may be used as API documentation, API endpoint testing, client library generation, as well as to serve the implementation of APIs and consumption of API output data.

In accordance with the techniques of the disclosure, the API definition file is modified to include an indication of one or more functions of the sets of first function definitions to be invoked to obtain the response from the APIs. In some examples, the API definition file is modified to include an indication of one or more API endpoints of interest to a user. In some examples, the API definition file is modified to include an indication of one or more permissions or security privileges defining functions that the user is permitted to invoke. In some examples, the API definition file is modified to include one or more parameters that are interchangeable with one or more terms of the natural language question (e.g., "aliases").

A function definition describes a function or operation that a corresponding API may perform in response to a request to invoke the function via an API endpoint. The function definition further describes what arguments the API expects to be provided as part of the request to invoke the operation. Typically, the function definition is provided in code or pseudo-code to illustrate the proper invocation of the operation. A function description provides a human-readable or natural language explanation of the function definition, and typically accompanies the function definition.

Conversational assistant system 102 receives, via user device 107, natural language question 104 of FIG. 1 from a user 105, such as an administrator of network analysis system 28. In some examples, natural language question 104 comprises, e.g., a question about a health of network system 2, a request to perform a monitoring task upon network system 2, or a request for generated computer code with which the APIs may be invoked. Typically, natural language question 104 is a string of text. However, in other examples, natural language question 104 is a video or audio sample.

Conversational assistant system 102 applies machine learning system 230 to process the natural language question 104 and the sets of first function definitions and corresponding function descriptions to obtain a list of second function definitions 110 that invoke one or more API endpoints of the plurality of APIs of network analysis system 28. Typically, each second function definition of the list of second function definitions is selected from the sets of first function definitions obtained from the API definition files.

Conversational assistant system 102 sequentially invokes, via a function corresponding to the second function definition, a corresponding API endpoint of an API of the plurality of APIs of network analysis system 28 to obtain a response 112 from the API of the plurality of APIs 108. In some examples, each of the APIs of the plurality of APIs is different. In some examples, conversational assistant system 102 may use an output of a first API invocation as an input to a second API invocation. For example, conversational assistant system 102 invokes, based on a first function definition of the list of second function definitions, a first function of a first API of APIs 108 to obtain a first response from the first API. Conversational assistant system 102 parameterizes, based on a second function definition of the list of second function definitions, a second function with the first response from the first API. Conversational assistant system 102 invokes, based on the second function definition, the second function of a second API of APIs 108, to obtain a second response from the second API.

Conversational assistant system 102 processes, via machine learning system 230 the responses from the APIs to generate natural language answer 106 for output at an output device. In some examples, conversational assistant system 102 uses separate machine learning systems, for example, by applying a first machine learning system to process the natural language question and the sets of first function definitions and corresponding function descriptions to obtain the list of second function definitions and applying a second machine learning system to process the responses from the APIs of the plurality of APIs to generate natural language answer 106. Typically, natural language answer 106 is a string of text. However, in other examples, natural language answer 106 is a video or audio sample, a graphical image, chart, table, etc.

In the foregoing example, conversational assistant system 102 received a natural language question about the APIs implemented by network analysis system 28 from user device 107. However, in other implementations, conversational assistant system 102 may receive a monitoring task to be performed upon network system 2. For example, natural language question 104 may comprise a request to "monitor instances of device CPU exceeding 90% utilization, and to receive reports of such instances at 5 minute intervals according to a particular blueprint format," or "if any link errors of a device 'leaf1' from a particular blueprint occur, report the services affected."

Conversational assistant system 102 applies machine learning system 230 to process the natural language description of the monitoring task and the sets of first function definitions and corresponding function descriptions to obtain a list of second function definitions that invoke one or more API endpoints of the plurality of APIs of network analysis system 28 that implement the monitoring task. Each second function definition of the list of second function definitions is selected from the sets of first function definitions obtained from the API definition files.

Conversational assistant system 102 may perform the one or more functions defined by the function definitions to implement the monitoring task. For example, for each second function definition of the list of second function definitions, conversational assistant system 102 sequentially invokes, via a function corresponding to the second function definition, a corresponding API endpoint of an API of the plurality of APIs of network analysis system 28 to obtain a response from the API of the plurality of APIs. Conversational assistant system 102 applies machine learning system 230 to the responses from the APIs of the plurality of APIs to generate a natural language description of a result of the monitoring task, which is output by an output device, such as a display device, audio device, user equipment, or other type of output device. In some examples, conversational assistant system 102 may receive and store feedback from the user regarding the natural language description of the results of the monitoring task, and optionally create a service ticket based on the feedback.

In yet another example, conversational assistant system 102 receives an input comprising a natural language request for automatically-generated code for invoking one or more API endpoints of the plurality of APIs of network analysis system 28. The natural language request may specify the desired operation of the code as well as existing context for the code.

Conversational assistant system 102 applies machine learning system 230 to the natural language request and the sets of first function definitions and corresponding function descriptions to obtain a list of second function definitions that invoke the one or more API endpoints of the plurality of APIs of the network system. Each second function definition of the list of second function definitions is selected from the sets of first function definitions obtained from the API definition files.

Conversational assistant system 102 applies machine learning system 230 to the list of second function definitions that invoke the one or more API endpoints to generate the code for invoking one or more API endpoints of the APIs of network system 2. In some examples, machine learning system 230 additionally generates a natural language description of the code. Conversational assistant system 102 outputs the code and the natural language description for output at an output device.

FIG. 3 shows a root cause analysis pipeline, in accordance with aspects of the disclosure. In some aspects, root cause analysis pipeline 300 includes knowledge graph generator 220, causal graph generator 222, graph pruner 224 and ranking service 225, each of which is described above with respect to the example of FIG. 2. Cross-layer telemetry is collected across multiple layers of the infrastructure from application to network (e.g., network system 2 of FIG. 1) in the form of timeseries data. This telemetry includes performance metrics for different layers which reflects a health of the different components of network system 2. The telemetry can be collected and analyzed in real-time to automatically detect and troubleshoot anomalies and provide root causes of anomalies in network system 2.

Processing by root cause analysis pipeline 300 can be initiated when a performance anomaly is detected for a given application. For example, anomaly detector 236 may identify, using ML model 241, anomalies and supply information regarding the anomalies to root cause analysis pipeline 300 using cross-layer telemetry 304. As an example, cross-layer telemetry 304 can include application layer telemetry data, compute/pod layer telemetry data, network layer telemetry data, device layer telemetry data, fabric layer telemetry data etc. collected by any of telemetry collector 216, network telemetry data collector 212 and/or device/fabric telemetry collector 214. Additionally, or instead, anomalies may be detected using rule-based anomaly detection and provided to root cause analysis pipeline 300.

As another example, root cause analysis pipeline 300 can be initiated upon request by a user, such as an administrator, responsive to natural language response 106 specifying a health of network system 2 described in FIGS. 1-2 above. In addition, root cause analysis pipeline 300 can be initiated upon detection of one or more anomalies may be detected as a result of a monitoring task specified by user 105 via natural language question 104 received from user device 107 described in FIGS. 1-2 above.

After an application performance issue is detected, knowledge graph generator 220 initiates creation of a knowledge graph from the real-time telemetry collected during the time period when the application anomaly is detected. As an example, if an application anomaly is detected at time T, then knowledge graph generator 220 can generate a knowledge graph for the entire infrastructure from application to network using cross-layer telemetry 304 for the past N time periods. Where N can be 5 minutes, 15 minutes, 30minutes, etc.

Telemetry for each layer is parsed to determine the nodes for each layer and their relationships with the neighboring nodes. Generally speaking, a node can represent any entity in a network system, whether physical, virtual, or software. As an example, a node may represent a device such as a network device, a computing device, a virtual device (e.g., virtual machine, virtual router, VRF etc.), an application, a service, a microservice etc. For example, from the response time telemetry for micro services, caller and callee services can be identified from the labels that are present in the telemetry. Similarly, if an application is hosted on Kubernetes platform, then relationships between a microservice and its multiple instances can be determined from the pod level telemetry.

A knowledge graph generated by knowledge graph generator 220 can include multiple layers such as an Application layer, Pod Instance layer, Compute Node layer, Network Probe layer, and/or Network Fabric Layers. Depending on the environment, other layers in the knowledge graph can be defined and added. For an example, a root cause analysis system can be used to model the different components within a router/switch, where dependency of the ingress ports, ingress queues, fabric ports, egress ports, egress queues can be represented as a knowledge graph. System 200 can be extended to such environments.

Graph pruner 224 can prune a knowledge graph to a smaller set of nodes based on the anomalies. In some aspects, pruning is done so that only nodes within a threshold distance of a node exhibiting an anomaly are selected. As used herein, a distance between two nodes is the number of edges between the nodes in the graph. In some aspects, the threshold distance is one (1), resulting in selection of the node experiencing the anomaly and its immediate neighbors. Pruning the graph can result in a smaller graph over which further root cause analysis is performed.

Knowledge graph generator 220 can expose Application Programming Interfaces (APIs) for creation and processing of the knowledge graph. Causality graph generator 222 can create a causality graph based on the pruned knowledge graph. Each node in the pruned knowledge graph has set of distinct KPIs. Causality graph generator 222 can use the KPI to add nodes to the nodes of the pruned knowledge graph. The causality graph can be generated in various ways.

After causality graph generator 222 has generated a causality graph, ranking service 225 can analyze the graph and rank the most likely root causes of an anomaly. In some aspects, ranking service 225 uses a "PageRank" algorithm to rank the nodes in the causality graph. In the PageRank algorithm, the importance of webpage increases if other important webpages point to the given page. A similar analogy is used to rank the nodes in the causality graph, where node is likely to get higher score if it is being pointed by other nodes to be the root cause.

There are two modes in which a PageRank algorithm is used. In the first mode, a root cause can be determined for all service level anomalies observed in the causality graph. In the second mode, a personalized PageRank algorithm can be used that is focused on performing root cause analysis on a selected set of services or infrastructure components.

Techniques are described for root cause analysis of distributed microservice-based applications deployed in a data center network. The techniques of the disclosure may be adapted to other environments.

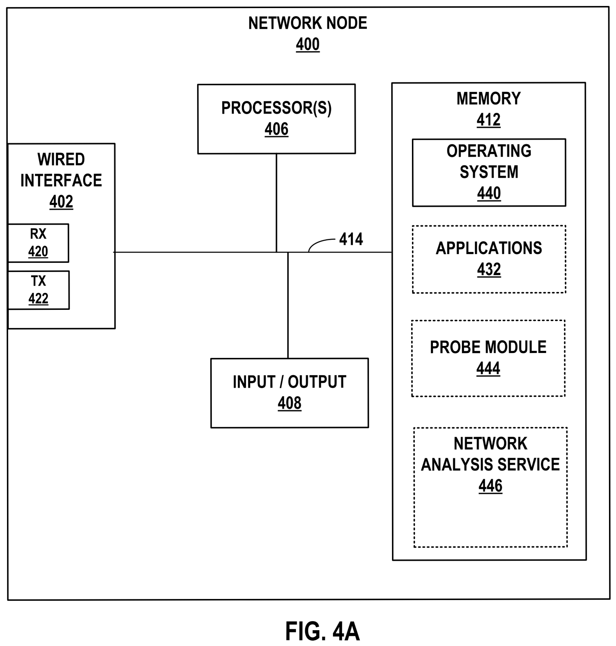

FIG. 4A is a block diagram illustrating an example network node, in accordance with the techniques described in this disclosure. Network node 400 of FIG. 4A may represent any of network devices 18, server hosting service nodes 10, servers or other computing devices associated with applications 30 of FIG. 1, or servers or computing devices associated with root cause analysis systems, such as network analysis systems 28, 200 of FIGS 1 and 2.

In this example, network node 400 includes a communications interface 402, e.g., an Ethernet interface, a processor 406, input / output 408, e.g., display, buttons, keyboard, keypad, touch screen, mouse, etc., a memory 412 coupled together via a bus 414 over which the various elements may interchange data and information. Communications interface 402 couples the network node 400 to a network, such as an enterprise network. Though only one interface is shown by way of example, those skilled in the art should recognize that network nodes may, and usually do, have multiple communication interfaces. Communications interface 402 includes a receiver (RX) 420 via which the network node 400, e.g., a server, can receive data and information. Communications interface 402 includes a transmitter (TX) 422, via which the network node 400, e.g., a server, can send data and information.

Memory 412 stores executable operating system 440 and may, in various configurations, store software applications 432, probe modules 444 and/or network analysis service 446. For example, network node 400 may be configured as a server that is part of cloud-based services 26 of FIG. 1. In such configurations, application 432 may be an implementation of one or more of applications 30 of FIG. 1. If the performance of software application 432 is being monitored using the techniques described herein, probe module 444 may be an implementation of a probe module 19 of FIG. 1.

Network node 400 may be configured as a server that is part of network analysis system 28. In such configurations, memory 412 may store one or more network analysis services 446 that communicate with or exchange data with network analysis system 28 of FIG. 1. Network analysis service 446 may be or include any combination of probe services 201, telemetry services 207, event streaming engine 218, fault localizer 240, graph analytics service 226, or anomaly detector 236.

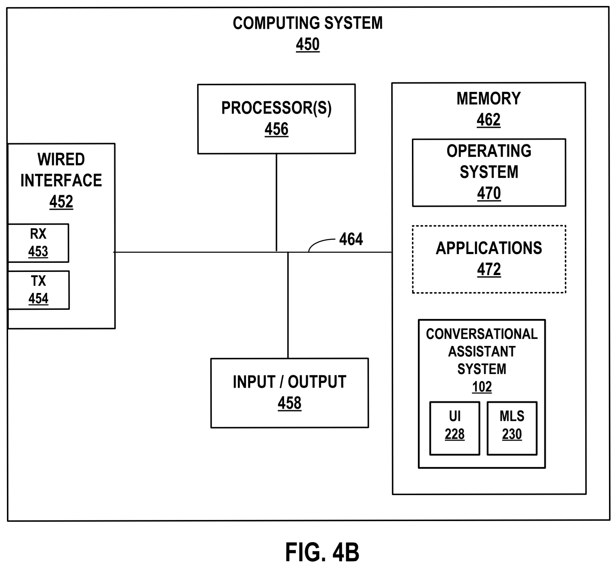

FIG. 4B is a block diagram illustrating an example computing system 450, in accordance with the techniques described in this disclosure. Computing system 450 of FIG. 4B implements an example of conversational assistant system 102 of FIGS. 1 and 2.

Computing system 450 comprises any suitable computing system having one or more computing devices, such as servers, desktop computers, laptop computers, gaming consoles, smart televisions, smart speaker, voice assistant devices, smart watches, handheld devices, tablets, mobile telephones, smartphones, etc. In some examples, at least a portion of computing system 450 is distributed across a cloud computing system, a data center, or across a network, such as the Internet or another public or private communications network for transmitting data between computing systems, servers, and computing devices.

In this example, computing system 450 includes a communications interface 452, e.g., an Ethernet interface, a processor 456, input / output 458, e.g., display, buttons, keyboard, keypad, touch screen, mouse, etc., a memory 462 coupled together via a bus 464 over which the various elements may interchange data and information. Communications interface 452 couples the computing system 450 to a network, such as an enterprise network. Though only one interface is shown by way of example, those skilled in the art should recognize that network nodes may, and usually do, have multiple communication interfaces. Communications interface 452 includes a receiver (RX) 453 via which the computing system 450, e.g., a server, can receive data and information. Communications interface 452 includes a transmitter (TX) 454, via which the network node 400, e.g., a server, can send data and information.

Memory 462 stores executable operating system 470 and may, in various configurations, store instructions for software applications 472, and/or conversational assistant system 102. In such configurations, application 432 may be an implementation of one or more of applications 30 of FIG. 1.

Computing system 450 implements conversational assistant system 102 as software or a combination of software and hardware. Conversational assistant system 102 may be or include any combination of user interface 228 or machine learning system 230 of FIGS. 1-2.

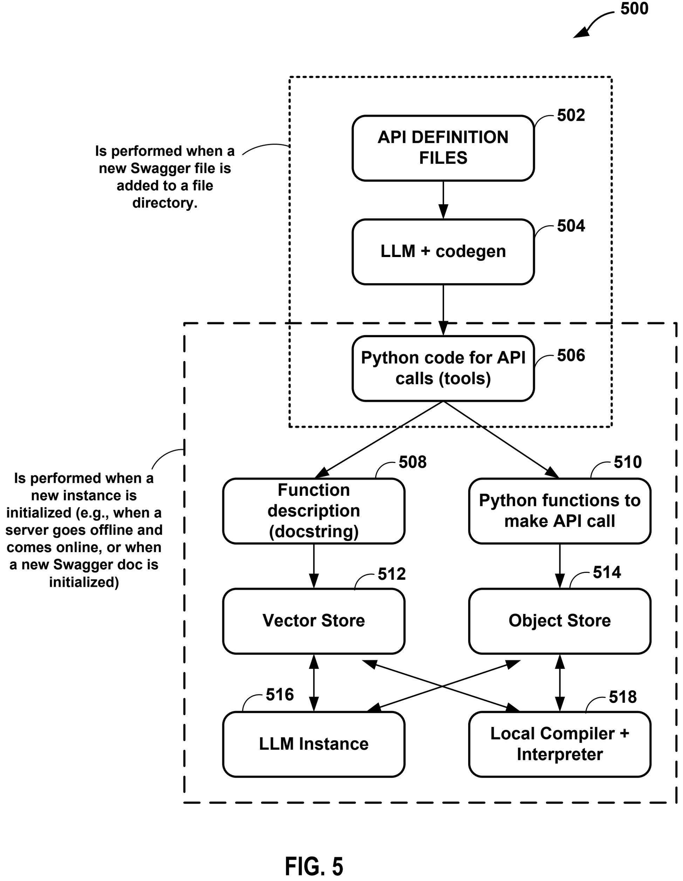

FIG. 5 is a block diagram illustrating an example system 500 for initializing a machine learning system to invoke APIs 108 of a network system, in accordance with the techniques of the disclosure. As depicted in the example of FIG. 5, system 500 employs an LLM to act as an intermediary between a user, who may provide natural language questions and communication, and one or more APIs implemented by network analysis system 28 of FIG. 1. In some examples, the APIs implemented by the network analysis system 28 are REST APIs or gRPC interfaces.

In some examples, a system receives, as an input, one or more API definition files 502. In the example of FIG. 5, each of the API definition file is a Swagger Doc. In other examples, or the API definition file is an OpenAPI specification. In some examples, the API definition files 502 have additional metadata, such as custom fields or parameters, that specific which of the APIs may be invoked by the conversational assistant system. For example, the metadata may include a whitelist with which verbs are subjected for use by the conversational assistant system or a blacklist of the items that are limited from use by the conversational assistant system.

System 500 processes API definition files 502 to generate client libraries for one or more APIs for the network analysis system 28, each of the client libraries comprising function definitions for invoking API endpoints of a corresponding API and corresponding function descriptions. For example, each time a new API definition file 502 is added to a file directory, system 500 processes API definition files 502, updates the LLM and code generation (504), and updates high-level, general purpose programming code for performing API calls (tools) (506). In some examples, the high-level, general purpose programming code is written in, e.g., Python.

As another example, each time a new instance is initialized, system 500 updates high-level, general purpose programming code for performing API calls (tools) (506), generates a function description (docstring) (508), stores function description 508 om vector store 512. In addition, system 500 generates high-level, general purpose programming code functions to make the API calls (510), stores the high-level, general purpose programming code functions in Object Store 514. An LLM instance 516 may draw from both vector store 512 and object store 514 as part of processing natural language question 104 of FIG. 1. In some examples, the LLM is AZURE OPENAI, CHATGPT, BERT, or another type of LLM. In addition, the LLM 516 may access local compiler and interpreter 518 during API invocation and/or code generation, which also may may draw from both vector store 512 and object store 514. The foregoing initialization may occur if a server hosing system 500 goes down and comes back up, or if a new API definition file 502 has been initialized.

In some examples, the LLM may generate questions ahead of time, which may be validated to minimize hallucination. The system 500 may direct a user to pre-generated questions that correspond to natural language question 104, where applicable, so as to provide a user with an option for a more-accurate query to the APIs.

In some examples, as the input provided to the LLM, questions generated ahead of time by a subject matter expert (e.g., aa developer of a particular API. These questions (referred to as "gold" questions) that correspond to natural language question 104 may also be output to user 105 via an output device (such as user device 107) where applicable, so as to provide user 105 with an option for a more-accurate query to the APIs/

In some examples, the system may receive feedback from user 105 via user device 107 regarding the usefulness or accuracy of a response. This feedback may be in the form of a "thumbs-up" or "thumbs-down" response. The system may update or modify prompts based at least in part on the feedback received from the user. In some examples, the system may use a "thumbs-down" response to automatically create a service ticket for investigation, such as a Jira ticket.

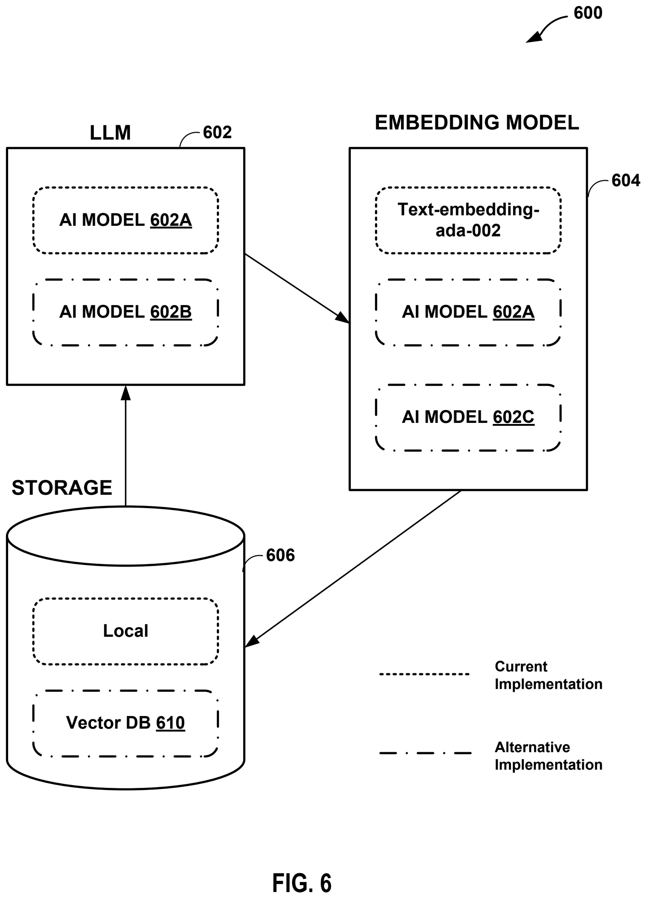

FIG. 6 is a block diagram illustrating an example implementation of a conversational assistant system for invoking APIs of a network system, in accordance with the techniques of the disclosure. FIG. 6 depicts both a current implementation with which conversational assistant system 102 of FIGS. 1-2 may be implemented, as well as potential alternative implementations for conversational assistant system 102.

For example, conversational assistant system 102 may be implemented using GPT-4o as LLM 602, text-embedding-ada-002 as embedding model 604, and local storage as storage 606. However, in alternative implementations of LLM 602, conversational assistant system 102 may employ LLAMA 3.1. In alternative implementations of embedding model 604, conversational assistant system 102 may employ AI models 602A-602C, examples of which include LLAMA 3.1 or SBERT. As an alternative to using local storage for storage 606, conversational assistant system 102 may employ vector database 610, such as CHROMA DB. However, these implementations are provided as examples only, and additional implementations are contemplated by the techniques of the disclosure.

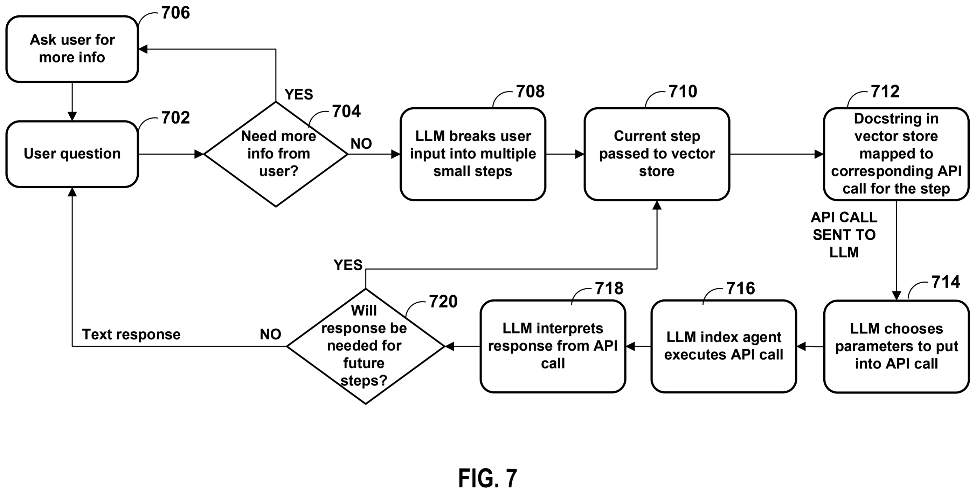

FIG. 7 is a flowchart illustrating an example operation in accordance with the techniques of the disclosure. The operation of FIG. 7 may be performed, e.g., by conversational assistant system 102 of FIGS. 1-2.

Conversational assistant system 102 receives a user question from user 105 via user device 107 (702). In some examples, the user question is in the form of natural language question 104. In some examples, natural language question 104 may not provide sufficient information or context with which conversational assistant system 102 may generate a response. If conversational assistant system 102 needs more information (e.g., "YES" block of 704), conversational assistant system 102 asks the user for more information to execute the query (706). For example, conversational assistant system 102 may generate, via an LLM (which may be an example of machine learning system 230 of FIG. 2), a prompt requesting the type of information requested or clarifications to natural language question 104.

If conversational assistant system 102 does not need more information (e.g., "NO" block of 704), conversational assistant system 102 applies the LLM, to break the user input into multiple, small steps (708). Conversational assistant system 102 passes a current step to vector store (710). Conversational assistant system 102 maps a docstring in the vector store to a corresponding API call for the current step (712), and the API call is sent to the LLM. The LLM chooses one or more parameters to put into the API call (714). An LLM index agent (such as LLAMA index agent) executes the parameterized API call (716). The LLM receives the response from the API call and interprets the response (718).

If the response is needed for future steps (e.g., "YES" block of 720), the conversational assistant system 102 passes the current step to vector store (710) and repeats operations 712, 714, 716, and 718. If the response is not needed for future steps (e.g., "NO" block of 720), the conversational assistant system 102 provides a text response generated by the LLM for output at an output device in the form of natural language response 104.

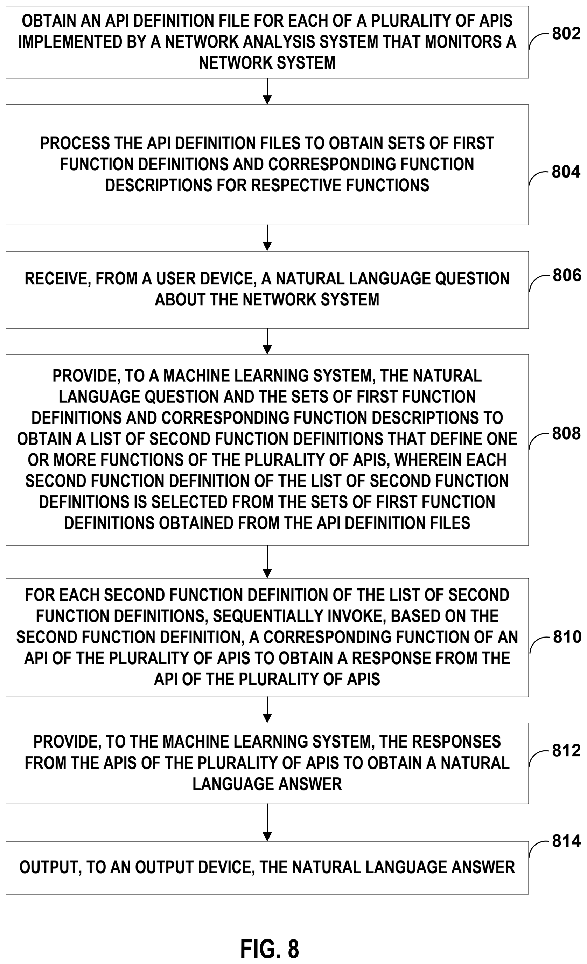

FIG. 8 is a flowchart illustrating an example operation in accordance with the techniques of the disclosure. The operation of FIG. 8 may be performed, e.g., by conversational assistant system 102 of FIGS. 1-2 and 4B.

Conversational assistant system 102 obtains an API definition file for each of APIs 108 implemented by network analysis system 28 that monitors network system 2 (802). In some examples, the API definition file comprises a Swagger document. In some examples, the API definition file is modified to include an indication of one or more functions of the sets of first function definitions to be invoked to obtain the response from the APIs. In some examples, the API definition file is modified to include an indication of one or more API endpoints of interest to a user. In some examples, the API definition file is modified to include an indication of one or more permissions or security privileges defining functions that the user is permitted to invoke. In some examples, the API definition file is modified to include one or more parameters that are interchangeable with one or more terms of the natural language question (e.g., "aliases").

Conversational assistant system 102 processes the API definition files for APIs 108 to obtain sets of first function definitions and corresponding function descriptions (804). The first function definitions are configured to invoke API endpoints to a specific API 108 of the network analysis system 28. For example, each of the first function definitions describe an operation that a corresponding API 108 may perform in response to a request to invoke the operation. The first function definition further describes what arguments the API expects to be provided as part of the request to invoke the operation. Each of the function descriptions provide a human-readable or natural language explanation of a corresponding first function definition.

Conversational assistant system 102 receives, from user 105 via user device 107, natural language question 104 about APIs 108 implemented by the network analysis system (806). Conversational assistant system 102 provides, to MLS 230, natural language question 104 and the sets of first function definitions and corresponding function descriptions to obtain a list of second function definitions 110 that that define one or more functions of APIs 108 of network analysis system 28 (also referred to herein as invoking an API endpoint of APIs 108) (808). Each second function definition 110 of the list of second function definitions 110 is selected from the sets of first function definitions obtained from the API definition files.

For each second function definition 110 of the list of second function definitions 110, conversational assistant system 102 sequentially invokes, via a function corresponding to the second function definition 110, a corresponding API endpoint of an API 108 of APIs 108 of network analysis system 28 to obtain a response 112 from the API 108 (810). Conversational assistant system 102 provides, to MLS 230, the responses 112 from the APIs 108 to obtain a natural language answer (812). Conversational assistant system 102 outputs, to an output device, natural language response 106. (814). In some examples, the output device may be I/O 458 of computing system 450 of FIG. 4B, an output device of the user device, or another type of output device, such as a display device, audio device, haptic feedback device, etc.

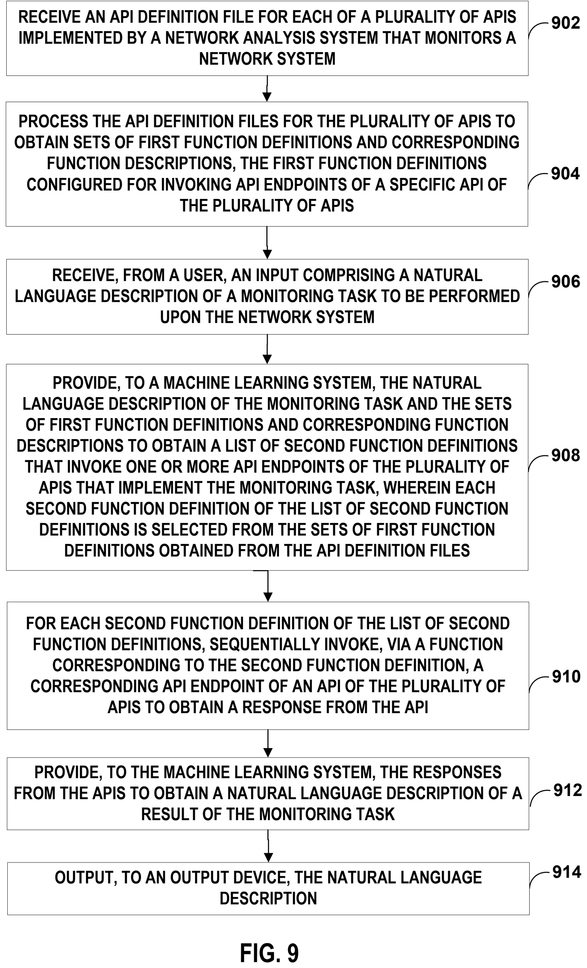

FIG. 9 is a flowchart illustrating an example operation in accordance with the techniques of the disclosure. The operation of FIG. 9 may be performed, e.g., by conversational assistant system 102 of FIGS. 1-2 and 4B.

Conversational assistant system 102 receives an API definition file for each of a plurality of APIs 108 implemented by network analysis system 28 (902). In some examples, the API definition file comprises a Swagger document. In some examples, the API definition file is modified to include an indication of one or more functions of the sets of first function definitions to be invoked to obtain the response from the APIs. In some examples, the API definition file is modified to include an indication of one or more API endpoints of interest to a user. In some examples, the API definition file is modified to include an indication of one or more permissions or security privileges defining functions that the user is permitted to invoke. In some examples, the API definition file is modified to include one or more parameters that are interchangeable with one or more terms of the natural language question (e.g., "aliases").

Conversational assistant system 102 processes the API definition files for the plurality of APIs 108 to obtain sets of first function definitions and corresponding function descriptions,

(904). The first function definitions are configured to invoke API endpoints of a specific API 108 of the network analysis system 28. For example, each of the first function definitions describe an operation that a corresponding API 108 may perform in response to a request to invoke the operation. The first function definition further describes what arguments the API expects to be provided as part of the request to invoke the operation. Each of the function descriptions provide a human-readable or natural language explanation of a corresponding first function definition.

Conversational assistant system 102 receives, from user 105 via an input device (such as user device 107), an input comprising a natural language description of a monitoring task to be performed upon network system 2 (906). Conversational assistant system 102 provides, to MLS 230, the natural language description of the monitoring task and the sets of first function definitions and corresponding function descriptions to obtain a list of second function definitions 110 that invoke one or more API endpoints of APIs 108 of network analysis system 28 that implement the monitoring task (908)., Each second function definition 110 of the list of second function definitions 110 is selected from the sets of first function definitions obtained from the API definition files.

For each second function definition 110 of the list of second function definitions 110, conversational assistant system 102 sequentially invokes, via a function corresponding to the second function definition 110, a corresponding API endpoint of an API 108 of APIs 108 of network analysis system 28 to obtain a response from the API 108 (910). Conversational assistant system 102 provides, to MLS 230, the responses 112 from the APIs 108 to obtain a natural language description of a result of the monitoring task (912). Conversational assistant system 102 outputs, to an output device, the natural language description (914). In some examples, the output device may be I/O 458 of computing system 450 of FIG. 4B, an output device of the user device, or another type of output device, such as a display device, audio device, haptic feedback device, etc.

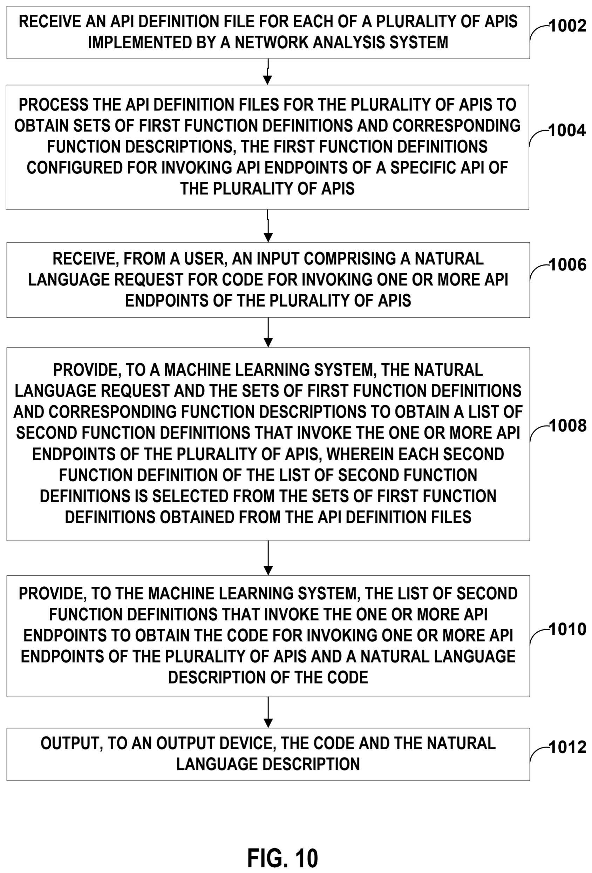

FIG. 10 is a flowchart illustrating an example operation in accordance with the techniques of the disclosure. The operation of FIG. 10 may be performed, e.g., by conversational assistant system 102 of FIGS. 1-2 and 4B.

Conversational assistant system 102 receives an API definition file for each of a plurality of APIs 108 implemented by network analysis system 28 (1002). In some examples, the API definition file comprises a Swagger document. In some examples, the API definition file is modified to include an indication of one or more functions of the sets of first function definitions to be invoked to obtain the response from the APIs. In some examples, the API definition file is modified to include an indication of one or more API endpoints of interest to a user. In some examples, the API definition file is modified to include an indication of one or more permissions or security privileges defining functions that the user is permitted to invoke. In some examples, the API definition file is modified to include one or more parameters that are interchangeable with one or more terms of the natural language question (e.g., "aliases").

Conversational assistant system 102 processes the API definition files for the plurality of APIs 108 to obtain sets of first function definitions and corresponding function descriptions, (1004). The first function definitions are configured to invoke API endpoints of a specific API 108 of the network analysis system 28. For example, each of the first function definitions describe an operation that a corresponding API 108 may perform in response to a request to invoke the operation. The first function definition further describes what arguments the API expects to be provided as part of the request to invoke the operation. Each of the function descriptions provide a human-readable or natural language explanation of a corresponding first function definition.

Conversational assistant system 102 receives, from user 105 via user device 107, an input comprising a natural language request for code for invoking one or more API endpoints of APIs 108 of network analysis system 28 (1006). Conversational assistant system 102 provides, to MLS 230, the natural language request and the sets of first function definitions and corresponding function descriptions to obtain a list of second function definitions 110 that invoke one or more API endpoints of APIs 108 of network analysis system 28 (1008). Each second function definition 110 of the list of second function definitions 110 is selected from the sets of first function definitions obtained from the API definition files.

Conversational assistant system 102 provides, to MLS 230, the list of second function definitions 110 that invoke the one or more API endpoints to obtain the code for invoking one or more API endpoints of APIs 108 of network analysis system 28 and a natural language description of the code (1010). Conversational assistant system 102 outputs, to an output device, the code and the natural language description (1012). In some examples, the output device may be I/O 458 of computing system 450 of FIG. 4B, an output device of the user device, or another type of output device, such as a display device, audio device, haptic feedback device, etc.

The following examples may illustrate one or more aspects of the disclosure.

Example A1. A system comprising: processing circuitry in communication with storage media, the processing circuitry configured to: receive an Application Programming Interface (API) definition file for each of a plurality of APIs implemented by a network analysis system; process the API definition files for the plurality of APIs to obtain sets of first function definitions and corresponding function descriptions, the first function definitions configured for invoking API endpoints of a specific API of the plurality of APIs of the network analysis system; receive, from a user device, a natural language question about the plurality of APIs implemented by the network analysis system; provide, to a machine learning system, the natural language question and the sets of first function definitions and corresponding function descriptions to obtain a list of second function definitions that invoke one or more API endpoints of the plurality of APIs of the network analysis system, wherein each second function definition of the list of second function definitions is selected from the sets of first function definitions obtained from the API definition files; for each second function definition of the list of second function definitions, sequentially invoke, via a function corresponding to the second function definition, a corresponding API endpoints of an API of the plurality of APIs of the network analysis system to obtain a response from the API of the plurality of APIs; provide, to the machine learning system, the responses from the APIs of the plurality of APIs to obtain a natural language answer; and output, to an output device, the natural language answer.

Example A2. The system of example A1, wherein the API definition file comprises a Swagger document.

Example A3. The system of any of examples A1-A2, wherein the API definition file is modified to include an indication of one or more functions of the sets of first function definitions to be invoked to obtain the response from the APIs.

Example A4. The system of any of examples A1-A3, wherein the API definition file is modified to include one or more parameters that are interchangeable with one or more terms of the natural language question.

Example A5. The system of any of examples A1-A4, wherein the plurality of APIs comprise a plurality of REpresentational State Transfer (REST) APIs or g-Remote Procedure Call (gRPC) interfaces.

Example A6. The system of any of examples A1-A5, wherein the machine leaning system comprises a large language model (LLM).

Example A7. The system of any of examples A1-A6, wherein, to sequentially invoke, for each second function definition of the list of second function definitions and via a function corresponding to the second function definition, the corresponding API endpoints of the API of the plurality of APIs of the network analysis system to obtain the response from the API, the processing circuitry is configured to: invoke, via a first function definition of the list of second function definitions, a first API endpoints of a first API of the plurality of APIs to obtain a first response from the first API; and invoke, via a second function definition of the list of second function definitions parameterized with the first response from the first API, a second API endpoints of a second API of the plurality of APIs to obtain a second response from the second API.

Example A8. The system of any of examples A1-A7, wherein the processing circuitry is configured to provide, to a first machine learning system, the natural language question and the sets of first function definitions and corresponding function descriptions to obtain the list of second function definitions, and wherein the processing circuitry is configured to provide, to a second machine learning system, the responses from the APIs of the plurality of APIs to obtain the natural language answer.

Example A9. A method comprising: receiving, by processing circuitry, an Application Programming Interface (API) definition file for each of a plurality of APIs implemented by a network analysis system; processing, by the processing circuitry, the API definition files for the plurality of APIs to obtain sets of first function definitions and corresponding function descriptions, the first function definitions configured for invoking API endpoints of a specific API of the plurality of APIs of the network analysis system; receiving, by the processing circuitry, from a user device, a natural language question about the plurality of APIs implemented by the network analysis system; providing, by the processing circuitry, to a machine learning system, the natural language question and the sets of first function definitions and corresponding function descriptions to obtain a list of second function definitions that invoke one or more API endpoints of the plurality of APIs of the network analysis system, wherein each second function definition of the list of second function definitions is selected from the sets of first function definitions obtained from the API definition files; for each second function definition of the list of second function definitions, sequentially invoking, by the processing circuitry, via a function corresponding to the second function definition, a corresponding API endpoint of an API of the plurality of APIs of the network analysis system to obtain a response from the API of the plurality of APIs; providing, by the processing circuitry, to the machine learning system, the responses from the APIs of the plurality of APIs to obtain a natural language answer; and outputting, by the processing circuitry, to an output device, the natural language answer.

Example A10. The method of example A9, as performed by the system of any of examples A2-A8.

Example A11. Computer-readable media comprising instructions that, when executed, cause processing circuitry to: receive an Application Programming Interface (API) definition file for each of a plurality of APIs implemented by a network analysis system; process the API definition files for the plurality of APIs to obtain sets of first function definitions and corresponding function descriptions, the first function definitions configured for invoking API endpoints of a specific API of the plurality of APIs of the network analysis system; receive, from a user device, a natural language question about the plurality of APIs implemented by the network analysis system; provide, to a machine learning system, the natural language question and the sets of first function definitions and corresponding function descriptions to obtain a list of second function definitions that invoke one or more API endpoints of the plurality of APIs of the network analysis system, wherein each second function definition of the list of second function definitions is selected from the sets of first function definitions obtained from the API definition files; for each second function definition of the list of second function definitions, sequentially invoke, via a function corresponding to the second function definition, a corresponding API endpoint of an API of the plurality of APIs of the network analysis system to obtain a response from the API of the plurality of APIs; provide, to the machine learning system, the responses from the APIs of the plurality of APIs to obtain a natural language answer; and output, to an output device, the natural language answer.

Example A12. The computer-readable storage media of example A11, wherein the instructions further cause the processing circuitry to operate as the system of any of examples A2-A8.

Example B1. A system comprising: processing circuitry in communication with storage media, the processing circuitry configured to: receive an Application Programming Interface (API) definition file for each of a plurality of APIs implemented by a network analysis system; process the API definition files for the plurality of APIs to obtain sets of first function definitions and corresponding function descriptions, the first function definitions configured for invoking API endpoints of a specific API of the plurality of APIs of the network analysis system; receive, from a user device, an input comprising a natural language description of a monitoring task to be performed upon a computer network; provide, to a machine learning system, the natural language description of the monitoring task and the sets of first function definitions and corresponding function descriptions to obtain a list of second function definitions that invoke one or more API endpoints of the plurality of APIs of the network analysis system that implement the monitoring task, wherein each second function definition of the list of second function definitions is selected from the sets of first function definitions obtained from the API definition files; for each second function definition of the list of second function definitions, sequentially invoke, via a function corresponding to the second function definition, a corresponding API endpoint of an API of the plurality of APIs of the network analysis system to obtain a response from the API of the plurality of APIs; provide, to the machine learning system, the responses from the APIs of the plurality of APIs to obtain a natural language description of a result of the monitoring task; and output, to an output device, the natural language description.

Example B2. The system of example B1, wherein the API definition file comprises a Swagger document.

Example B3. The system of any of examples B1-B2, wherein the API definition file is modified to include an indication of one or more functions of the sets of first function definitions to be invoked to perform the monitoring task.

Example B4. The system of any of examples B1-B3, wherein the API definition file is modified to include one or more parameters that are interchangeable with one or more terms of the natural language description of the monitoring task.

Example B5. The system of any of examples B1-B4, wherein the plurality of APIs comprise a plurality of REpresentational State Transfer (REST) APIs or g-Remote Procedure Call (gRPC) interfaces.

Example B6. The system of any of examples B1-B5, wherein the machine leaning system comprises a large language model (LLM).

Example B7. The system of any of examples B1-B6, wherein, to sequentially invoke, for each second function definition of the list of second function definitions and via a function corresponding to the second function definition, the corresponding API endpoint of the API of the plurality of APIs of the network analysis system to obtain the response from the API, the processing circuitry is configured to: invoke, via a first function definition of the list of second function definitions, a first API endpoint of to a first API of the plurality of APIs to obtain a first response from the first API; and invoke, via a second function definition of the list of second function definitions parameterized with the first response from the first API, a second API endpoint of a second API of the plurality of APIs to obtain a second response from the second API.

Example B8. The system of any of examples B1-B7, wherein the processing circuitry is configured to provide, to a first machine learning system, the natural language question and the sets of first function definitions and corresponding function descriptions to obtain the list of second function definitions, and wherein the processing circuitry is configured to provide, to a second machine learning system, the responses from the APIs of the plurality of APIs to obtain the natural language answer.

Example B9. A method comprising: receiving, by processing circuitry, an Application Programming Interface (API) definition file for each of a plurality of APIs implemented by a network analysis system; processing, by the processing circuitry, the API definition files for the plurality of APIs to obtain sets of first function definitions and corresponding function descriptions, the first function definitions configured for invoking API endpoints of a specific API of the plurality of APIs of the network analysis system; receiving, by the processing circuitry, from a user device, an input comprising a natural language description of a monitoring task to be performed upon a computer network; providing, by the processing circuitry, to a machine learning system, the natural language description of the monitoring task and the sets of first function definitions and corresponding function descriptions to obtain a list of second function definitions that invoke one or more API endpoints of the plurality of APIs of the network analysis system that implement the monitoring task, wherein each second function definition of the list of second function definitions is selected from the sets of first function definitions obtained from the API definition files; for each second function definition of the list of second function definitions, sequentially invoking, by the processing circuitry, via a function corresponding to the second function definition, a corresponding API endpoint of an API of the plurality of APIs of the network analysis system to obtain a response from the API of the plurality of APIs; providing, by the processing circuitry, to the machine learning system, the responses from the APIs of the plurality of APIs to obtain a natural language description of a result of the monitoring task; and outputting, by the processing circuitry, to an output device, the natural language description.

Example B10. The method of example B9, as performed by the system of any of examples B2-B8.

Example B11. Computer-readable media comprising instructions that, when executed, cause processing circuitry to: receive an Application Programming Interface (API) definition file for each of a plurality of APIs implemented by a network analysis system; process the API definition files for the plurality of APIs to obtain sets of first function definitions and corresponding function descriptions, the first function definitions configured for invoking API endpoints of a specific API of the plurality of APIs of the network analysis system; receive, from a user device, an input comprising a natural language description of a monitoring task to be performed upon a computer network; provide, to a machine learning system, the natural language description of the monitoring task and the sets of first function definitions and corresponding function descriptions to obtain a list of second function definitions that invoke one or more API endpoints of the plurality of APIs of the network analysis system that implement the monitoring task, wherein each second function definition of the list of second function definitions is selected from the sets of first function definitions obtained from the API definition files; for each second function definition of the list of second function definitions, sequentially invoke, via a function corresponding to the second function definition, a corresponding API endpoint of an API of the plurality of APIs of the network analysis system to obtain a response from the API of the plurality of APIs; provide, to the machine learning system, the responses from the APIs of the plurality of APIs to obtain a natural language description of a result of the monitoring task; and output, to an output device, the natural language description.

Example B12. The computer-readable storage media of example B11, wherein the instructions further cause the processing circuitry to operate as the system of any of examples B2-B8.

Example C1. A system comprising: processing circuitry in communication with storage media, the processing circuitry configured to: receive an Application Programming Interface (API) definition file for each of a plurality of APIs implemented by a network analysis system; process the API definition files for the plurality of APIs to obtain sets of first function definitions and corresponding function descriptions, the first function definitions configured for invoking API endpoint of a specific API of the plurality of APIs of the network analysis system; receive, from a user device, an input comprising a natural language request for code for invoking one or more API endpoints of the plurality of APIs of the network analysis system; provide, to a machine learning system, the natural language request and the sets of first function definitions and corresponding function descriptions to obtain a list of second function definitions that invoke the one or more API endpoints of the plurality of APIs of the network analysis system, wherein each second function definition of the list of second function definitions is selected from the sets of first function definitions obtained from the API definition files; provide, to the machine learning system, the list of second function definitions that invoke the one or more API endpoints to obtain the code for invoking one or more API endpoints of the plurality of APIs of the network analysis system and a natural language description of the code; and output, to an output device, the code and the natural language description.

Example C2. The system of example C1, wherein the API definition file comprises a Swagger document.

Example C3. The system of any of examples C1-C2, wherein the API definition file is modified to include an indication of one or more functions of the sets of first function definitions to be included in the generated code for invoking one or more API endpoints of the plurality of APIs.

Example C4. The system of any of examples C1-C3, wherein the API definition file is modified to include one or more parameters that are interchangeable with one or more terms of the natural language description of the monitoring task.

Example C5. The system of any of examples C1-C4, wherein the plurality of APIs comprise a plurality of REpresentational State Transfer (REST) APIs or g-Remote Procedure Call (gRPC) interfaces.

Example C6. The system of any of examples C1-C5, wherein the machine leaning system comprises a large language model (LLM).

Example C7. The system of any of examples C1-C6, wherein the processing circuitry is configured to provide, to a first machine learning system, the natural language question and the sets of first function definitions and corresponding function descriptions to obtain the list of second function definitions, and wherein the processing circuitry is configured to provide, to a second machine learning system, the list of second function definitions that invoke the one or more API endpoints to obtain the natural language answer.

Example C8. A method comprising: receiving, by processing circuitry, an Application Programming Interface (API) definition file for each of a plurality of APIs implemented by a network analysis system; processing, by the processing circuitry, the API definition files for the plurality of APIs to obtain sets of first function definitions and corresponding function descriptions, the first function definitions configured for invoking API endpoints of a specific API of the plurality of APIs of the network analysis system; receiving, by the processing circuitry, from a user device, an input comprising a natural language request for code for invoking one or more API endpoints of the plurality of APIs of the network analysis system; providing, by the processing circuitry, to a machine learning system, the natural language request and the sets of first function definitions and corresponding function descriptions to obtain a list of second function definitions that invoke the one or more API endpoints of the plurality of APIs of the network analysis system, wherein each second function definition of the list of second function definitions is selected from the sets of first function definitions obtained from the API definition files; providing, by the processing circuitry, to the machine learning system, the list of second function definitions that invoke the one or more API endpoints to obtain the code for invoking one or more API endpoints of the plurality of APIs of the network analysis system and a natural language description of the code; and outputting, by the processing circuitry, to an output device, the code and the natural language description.

Example C9. The method of example C8, as performed by the system of any of examples C2-C7.

Example C10. Computer-readable media comprising instructions that, when executed, cause processing circuitry to: receive an Application Programming Interface (API) definition file for each of a plurality of APIs implemented by a network analysis system; process the API definition files for the plurality of APIs to obtain sets of first function definitions and corresponding function descriptions, the first function definitions configured for invoking API endpoints of a specific API of the plurality of APIs of the network analysis system; receive, from a user device, an input comprising a natural language request for code for invoking one or more API endpoints of the plurality of APIs of the network analysis system; provide, to a machine learning system, the natural language request and the sets of first function definitions and corresponding function descriptions to obtain a list of second function definitions that invoke the one or more API endpoints of the plurality of APIs of the network analysis system, wherein each second function definition of the list of second function definitions is selected from the sets of first function definitions obtained from the API definition files; provide, to the machine learning system, the list of second function definitions that invoke the one or more API endpoints to obtain the code for invoking one or more API endpoints of the plurality of APIs of the network analysis system and a natural language description of the code; and output, to an output device, the code and the natural language description.

Example C11. The computer-readable storage media of example C10, wherein the instructions further cause the processing circuitry to operate as the system of any of examples C2-C7.

The techniques described herein may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus such as a processor or an integrated circuit device, such as an integrated circuit chip or chipset. Alternatively or additionally, if implemented in software or firmware, the techniques may be realized at least in part by a computer-readable data storage medium comprising instructions that, when executed, cause a processor to perform one or more of the methods described above. For example, the computer-readable data storage medium may store such instructions for execution by a processor.

A computer-readable medium may form part of a computer program product, which may include packaging materials. A computer-readable medium may comprise a computer data storage medium such as random access memory (RAM), read-only memory (ROM), non-volatile random access memory (NVRAM), electrically erasable programmable read-only memory (EEPROM), Flash memory, magnetic or optical data storage media, and the like. In some examples, an article of manufacture may comprise one or more computer-readable storage media.

In some examples, the computer-readable storage media may comprise non-transitory media. The term "non-transitory" may indicate that the storage medium is not embodied in a carrier wave or a propagated signal. In certain examples, a non-transitory storage medium may store data that can, over time, change (e.g., in RAM or cache).

A computer-readable medium may also or alternatively comprise a transmission medium by which instructions may be conveyed. A computer-readable transmission medium may include carrier waves, transmission signals or the like. A computer-readable transmission medium may convey instructions between components of a single computer system and/or between plural separate computer systems.

The code or instructions may be software and/or firmware executed by processing circuitry including one or more processors, such as one or more digital signal processors (DSPs), general purpose microprocessors, application-specific integrated circuits (ASICs), field-programmable gate arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software modules or hardware modules.

Therefore, from one perspective, there have been described techniques for a conversational assistant system that employs a machine learning system to act as an intermediary between natural language questions of a user and one or more Application Programming Interfaces (APIs) implemented by a network analysis system. In one example, the conversational assistant system receives API definition files including sets of function definitions and corresponding function descriptions and a natural language question from a user device. The conversational assistant system processes the API definition files and the natural language question to obtain function definitions invoking API endpoints of the APIs. The conversational assistant system sequentially invokes, based on the function definitions, the API endpoints to obtain responses from the APIs implemented by the network analysis system. The conversational assistant system generates, based at least in part on the responses from the APIs, a natural language answer for output at an output device.

Further examples of feature combinations taught by the present disclosure are set out in the following numbered clauses.

Clause 1. A system comprising: processing circuitry in communication with storage media, the processing circuitry configured to: obtain an Application Programming Interface (API) definition file for each of a plurality of APIs implemented by an analysis system that monitors a network system; process the API definition files for the plurality of APIs to obtain sets of first function definitions and corresponding function descriptions for respective functions; receive, from a user device, a natural language question about the network system; provide, to a machine learning system, the natural language question and the sets of first function definitions and corresponding function descriptions to obtain a list of second function definitions that define one or more functions of the plurality of APIs, wherein each second function definition of the list of second function definitions is selected from the sets of first function definitions obtained from the API definition files; for each second function definition of the list of second function definitions, sequentially invoke, based on the second function definition, a corresponding function of an API of the plurality of APIs to obtain a response from the API of the plurality of APIs; provide, to the machine learning system, the responses from the APIs of the plurality of APIs to obtain a natural language answer; and output the natural language answer.

Clause 2. The system of clause 1, wherein the API definition file comprises a Swagger document.

Clause 3. The system of clause 1 or 2, wherein the API definition file is modified to include an indication of one or more functions of the sets of first function definitions to be invoked to obtain the response from the API of the plurality of APIs.

Clause 4. The system of clause 1, 2 or 3, wherein the API definition file is modified to include one or more parameters that are interchangeable with one or more terms of the natural language question.

Clause 5. The system of any preceding clause, wherein the plurality of APIs comprise a plurality of REpresentational State Transfer (REST) APIs or g-Remote Procedure Call (gRPC) interfaces.

Clause 6. The system of any preceding clause, wherein the machine leaning system comprises a large language model (LLM).

Clause 7. The system of any preceding clause, wherein, to sequentially invoke, based on the second function definition, the corresponding function of the API of the plurality of APIs to obtain the response from the API of the plurality of APIs, the processing circuitry is configured to: invoke, based on a first function definition of the list of second function definitions, a first function of a first API of the plurality of APIs to obtain a first response from the first API; and invoke, based on a second function definition of the list of second function definitions, a second function of a second API of the plurality of APIs, to obtain a second response from the second API, wherein the second function is parameterized with the first response from the first API.

Clause 8. The system of any preceding clause, wherein the processing circuitry is configured to provide, to a first machine learning system, the natural language question and the sets of first function definitions and corresponding function descriptions to obtain the list of second function definitions, and wherein the processing circuitry is configured to provide, to a second machine learning system, the responses from the APIs of the plurality of APIs to obtain the natural language answer.

Clause 9. A method comprising: obtaining, by a computing system, an Application Programming Interface (API) definition file for each of a plurality of APIs implemented by an analysis system that monitors a network system; processing, by the computing system, the API definition files for the plurality of APIs to obtain sets of first function definitions and corresponding function descriptions for respective functions; receiving, by the computing system and from a user device, a natural language question about the network system; providing, by the computing system and to a machine learning system, the natural language question and the sets of first function definitions and corresponding function descriptions to obtain a list of second function definitions that define one or more functions of the plurality of APIs, wherein each second function definition of the list of second function definitions is selected from the sets of first function definitions obtained from the API definition files; for each second function definition of the list of second function definitions, sequentially invoking, by the computing system and based on the second function definition, a corresponding function of an API of the plurality of APIs to obtain a response from the API of the plurality of APIs; providing, by the computing system and to the machine learning system, the responses from the APIs of the plurality of APIs to obtain a natural language answer; and outputting, by the computing system, the natural language answer.

Clause 10. The method of clause 9, wherein the API definition file comprises a Swagger document.

Clause 11. The method of clause 9 or 10, wherein the API definition file is modified to include an indication of one or more functions of the sets of first function definitions to be invoked to obtain the response from the API of the plurality of APIs.

Clause 12. The method of clause 9, 10 or 11, wherein the API definition file is modified to include one or more parameters that are interchangeable with one or more terms of the natural language question.

Clause 13. The method of any of clauses 9 to 12, wherein the plurality of APIs comprise a plurality of REpresentational State Transfer (REST) APIs or g-Remote Procedure Call (gRPC) interfaces.

Clause 14. The method of any of clauses 9 to 13, wherein the machine leaning system comprises a large language model (LLM).

Clause 15. The method of any of clauses 9 to 14, wherein, sequentially invoking, based on the second function definition, the corresponding function of the API of the plurality of APIs to obtain the response from the API of the plurality of APIs comprises: invoking, based on a first function definition of the list of second function definitions, a first function of a first API of the plurality of APIs to obtain a first response from the first API; and invoking, based on a second function definition of the list of second function definitions, a second function of a second API of the plurality of APIs, to obtain a second response from the second API, wherein the second function is parameterized with the first response from the first API.

Clause 16. The method of any of clauses 9 to 15, .wherein providing the natural language question and the sets of first function definitions and corresponding function descriptions to obtain the list of second function definitions comprises providing, to a first machine learning system, the natural language question and the sets of first function definitions and corresponding function descriptions to obtain the list of second function definitions, and wherein providing the responses from the APIs of the plurality of APIs to obtain the natural language answer comprises providing, to a second machine learning system, the responses from the APIs of the plurality of APIs to obtain the natural language answer.

Clause 17. Computer-readable media comprising instructions that, when executed, cause processing circuitry to: obtain an Application Programming Interface (API) definition file for each of a plurality of APIs implemented by an analysis system that monitors a network system; process the API definition files for the plurality of APIs to obtain sets of first function definitions and corresponding function descriptions for respective functions; receive, from a user device, a natural language question about the network system; provide, to a machine learning system, the natural language question and the sets of first function definitions and corresponding function descriptions to obtain a list of second function definitions that define one or more functions of the plurality of APIs, wherein each second function definition of the list of second function definitions is selected from the sets of first function definitions obtained from the API definition files; for each second function definition of the list of second function definitions, sequentially invoke, based on the second function definition, a corresponding function of an API of the plurality of APIs to obtain a response from the API of the plurality of APIs; provide, to the machine learning system, the responses from the APIs of the plurality of APIs to obtain a natural language answer; and output the natural language answer.

Clause 18. The computer-readable medium of clause 17, wherein the API definition file is modified to include an indication of one or more functions of the sets of first function definitions to be invoked to obtain the response from the API of the plurality of APIs.

Clause 19. The computer-readable medium of clause 17 or 18, wherein the API definition file is modified to include one or more parameters that are interchangeable with one or more terms of the natural language question.

Clause 20. The computer-readable medium of clause 17, 18 or 19, wherein the plurality of APIs comprise a plurality of REpresentational State Transfer (REST) APIs or g-Remote Procedure Call (gRPC) interfaces.

## Claims

1. A system comprising:
processing circuitry in communication with storage media, the processing circuitry configured to:
obtain an Application Programming Interface, API, definition file for each of a plurality of APIs implemented by an analysis system that monitors a network system;
process the API definition files for the plurality of APIs to obtain sets of first function definitions and corresponding function descriptions for respective functions;
receive, from a user device, a natural language question about the network system;
provide, to a machine learning system, the natural language question and the sets of first function definitions and corresponding function descriptions to obtain a list of second function definitions that define one or more functions of the plurality of APIs, wherein each second function definition of the list of second function definitions is selected from the sets of first function definitions obtained from the API definition files;
for each second function definition of the list of second function definitions, sequentially invoke, based on the second function definition, a corresponding function of an API of the plurality of APIs to obtain a response from the API of the plurality of APIs;
provide, to the machine learning system, the responses from the APIs of the plurality of APIs to obtain a natural language answer; and
output the natural language answer.

2. The system of claim 1, wherein the API definition file comprises a Swagger document.

3. The system of any of claims 1-2, wherein the API definition file is modified to include an indication of one or more functions of the sets of first function definitions to be invoked to obtain the response from the API of the plurality of APIs.

4. The system of any of claims 1-3, wherein the API definition file is modified to include one or more parameters that are interchangeable with one or more terms of the natural language question.

5. The system of any of claims 1-4, wherein the plurality of APIs comprise a plurality of REpresentational State Transfer, REST, APIs or g-Remote Procedure Call, gRPC, interfaces.

6. The system of any of claims 1-5, wherein the machine leaning system comprises a large language model, LLM.

7. The system of any of claims 1-6, wherein, to sequentially invoke, based on the second function definition, the corresponding function of the API of the plurality of APIs to obtain the response from the API of the plurality of APIs, the processing circuitry is configured to:
invoke, based on a first function definition of the list of second function definitions, a first function of a first API of the plurality of APIs to obtain a first response from the first API; and
invoke, based on a second function definition of the list of second function definitions, a second function of a second API of the plurality of APIs, to obtain a second response from the second API, wherein the second function is parameterized with the first response from the first API.

8. The system of any of claims 1-7,
wherein the processing circuitry is configured to provide, to a first machine learning system, the natural language question and the sets of first function definitions and corresponding function descriptions to obtain the list of second function definitions, and
wherein the processing circuitry is configured to provide, to a second machine learning system, the responses from the APIs of the plurality of APIs to obtain the natural language answer.

9. A method comprising:
obtaining, by a computing system, an Application Programming Interface, API, definition file for each of a plurality of APIs implemented by an analysis system that monitors a network system;
processing, by the computing system, the API definition files for the plurality of APIs to obtain sets of first function definitions and corresponding function descriptions for respective functions;
receiving, by the computing system and from a user device, a natural language question about the network system;
providing, by the computing system and to a machine learning system, the natural language question and the sets of first function definitions and corresponding function descriptions to obtain a list of second function definitions that define one or more functions of the plurality of APIs, wherein each second function definition of the list of second function definitions is selected from the sets of first function definitions obtained from the API definition files;
for each second function definition of the list of second function definitions, sequentially invoking, by the computing system and based on the second function definition, a corresponding function of an API of the plurality of APIs to obtain a response from the API of the plurality of APIs;
providing, by the computing system and to the machine learning system, the responses from the APIs of the plurality of APIs to obtain a natural language answer; and
outputting, by the computing system, the natural language answer.

10. The method of claim 9, further comprising steps corresponding to the functionality recited in any of claims 2-8.

11. Computer-readable media comprising instructions that, when executed by one or more programmable processors, cause the one or more programmable processors to become configured to carry out the method of any of claims 9-10.
